# EUROPEAN PATENT APPLICATION

(11) **EP 4 760 459 A1**
(43) Date of publication of application: **17.06.2026**
(21) Application number: 24897827.2
(22) Date of filing: 06.09.2024
(51) Int. Cl.: G06F 3/01, H04N 13/344, H04N 13/383, H04N 13/128, H04N 13/183, H04N 23/67, H04N 23/63, H04N 13/271, G06F 3/00

(54) **WEARABLE DEVICE FOR PROVIDING VIRTUAL OBJECT FOR GUIDING CAPTURING OF IMAGE OR VIDEO, AND METHOD THEREOF**

(30) Priority: 29.11.2023 KR 20230170072; 27.12.2023 KR 20230193656
(71) Applicant: Samsung Electronics Co., Ltd., Suwon-si, Gyeonggi-do 16677 (KR)
(72) Inventor: LEE, Hyunjun, Suwon-si Gyeonggi-do 16677 (KR); KIM, Jiwon, Suwon-si Gyeonggi-do 16677 (KR); SHIN, Eunhye, Suwon-si Gyeonggi-do 16677 (KR); YEO, Jaeyung, Suwon-si Gyeonggi-do 16677 (KR); LEE, Jinwon, Suwon-si Gyeonggi-do 16677 (KR)
(74) Representative: Gulde & Partner
(86) International application number: PCT/KR2024/013510
(87) International publication number: WO 2025/116227

(57) **Abstract**

A wearable device according to one embodiment can acquire images by using one or more cameras. The wearable device can: display, on a first display, a screen representing the surrounding environment of the wearable device by using at least some of the images; in response to a first input for executing a camera application, visually emphasize a portion of the screen, corresponding to an area to be captured using the camera application, with respect to the remaining portion of the screen; and, while displaying the visually emphasized portion, capture an area in response to a second input for capturing the area, and display, on a second display, an indicator indicating that photographing is performed using the one or more cameras

## Description

### [Technical Field]

The disclosure relates to a wearable device for providing a virtual object for guiding shooting and a method thereof.

### [Background Art]

In order to provide an enhanced user experience, an electronic device providing an augmented reality (AR) service that displays information generated by a computer in association with an external object in the real-world are being developed. The electronic device may be a wearable device that may be worn by a user. For example, the electronic device may be AR glasses and/or a head-mounted device (HMD).

The above-described information may be provided as a related art for the purpose of helping to understand the present disclosure. No claim or determination is raised as to whether any of the above-described information may be applied as a prior art associated with the present disclosure.

### [Disclosure]

### [Technical Solution]

According to an example embodiment, a wearable device may comprise: a housing, a first display, based on being worn by a user, disposed toward an eye of the user, a second display directed to a second direction opposite to a first direction to which the first display is directed, one or more cameras, memory storing instructions, comprising one or more storage media, and at least one processor comprising processing circuitry. At least one processor individually or collectively, may be configured to execute the instructions and configured to cause the wearable device to: obtain images using the one or more cameras. At least one processor individually or collectively, may be configured to cause the wearable device to control the first display to display a screen representing environment adjacent to the wearable device using at least portion of the images. At least one processor individually or collectively, may be configured to cause the wearable device to, while displaying the screen, receive a first input to execute a camera application. At least one processor individually or collectively, may be configured to cause the wearable device to, in response to the first input, control the first display to visually highlight, with respect to a remaining portion of the screen, a portion of the screen to be captured using the camera application. At least one processor individually or collectively, may be configured to cause the wearable device to, while displaying the portion of the screen visually highlighted with respect to the remaining portion of the screen, receive a second input to capture the portion of the screen. At least one processor individually or collectively, may be configured to cause the wearable device to, in response to the second input, capture the portion of the screen. At least one processor individually or collectively, may be configured to cause the wearable device to control the second display to display an indicator providing a notification of performing shooting using the one or more cameras.

According to an example embodiment, a method of operating a wearable device may be provided. The wearable device may comprise a housing, a first display, based on being worn by a user, disposed toward an eye of the user, a second display directed to a second direction opposite to a first direction to which the first display is directed, and one or more cameras. The method may comprise obtaining images using the one or more cameras. The method may comprise controlling the first display to display a screen representing environment adjacent to the wearable device using at least portion of the images. The method may comprise, while displaying the screen, receiving a first input to execute a camera application. The method may comprise, in response to the first input, controlling the first display to visually highlight, with respect to a remaining portion of the screen, a portion of the screen to be captured using the camera application. The method may comprise, while displaying the portion of the screen that is visually highlighted with respect to the remaining portion of the screen, receiving a second input to capture the portion of the screen. The method may comprise, in response to the second input, capturing the portion of the screen. The method may comprise controlling the second display to display an indicator to notify performing shooting using the one or more cameras.

According to an example embodiment, a wearable device may comprise: a housing, a first display disposed on a first surface of the housing directed to, based on the wearable device being worn by a user, a face of the user, a second display disposed on a second surface of the housing directed to, based on the wearable device being worn by the user, an external environment of the wearable device, a plurality of cameras configured to obtain a plurality of images with respect to at least portion of the external environment of the wearable device, memory storing instructions, comprising one or more storage media, and at least one processor comprising processing circuitry. At least one processor individually or collectively, may be configured to execute the instructions and configured to cause the wearable device to: display, through the first display, a composite image with respect to at least portion of the external environment generated based on the plurality of images, and a view finder object at least partially superimposed on the composite image. At least one processor individually or collectively, may be configured to cause the wearable device to, in an image shooting mode, display, through the second display, a first visual notification corresponding to the image shooting mode while the composite image and the view finder object is displayed through the first display. At least one processor individually or collectively, may be configured to cause the wearable device to, in a video shooting mode, display, through the second display, a second visual notification corresponding to the video shooting mode while the composite image and the view finder object is displayed through the second display. At least one processor individually or collectively, may be configured to cause the wearable device to, in the image shooting mode or the video shooting mode, store at least portion of the composite image corresponding to the view finder object in the memory in response to a user input.

According to an example embodiment, a wearable device may comprise: a housing, a display disposed on at least a portion of the housing and arranged in front of an eye of a user based on wearing the wearable device, a plurality of cameras configured to obtain images with respect to at least a portion of an external environment of the wearable device, memory storing instructions, and at least one processor comprising processing circuitry. At least one processor, individually and/or collectively, may be configured to execute the instructions and configured to cause the wearable device to: in response to a first input, display a view finder object on a composite image of the images, wherein composite image may be displayed to represent a portion of the external environment beyond the display. At least one processor individually or collectively, may be configured to cause the wearable device to, in response to a second input for moving or resizing the view finder object, change at least one of a position or a size of the view finder object, while displaying the view finder object on the composite image. At least one processor individually or collectively, may be configured to cause the wearable device to, in response to a third input for shooting, store, in the memory, a portion of the composite image corresponding to the view finder object, while displaying the view finder object on the composite image.

According to an example embodiment, a method of operating a wearable device may be provided. The wearable device may comprise: a housing, a display disposed on at least a portion of the housing and arranged in front of an eye of a user wearing the wearable device, a plurality of cameras obtaining images with respect to at least a portion of an external environment of the wearable device. The method may comprise: in response to a first input, displaying a view finder object on a composite image of the images, wherein the composite image may be displayed to represent a portion of the external environment beyond the display. The method may comprise, in response to a second input for moving or resizing the view finder object, changing at least one of a position or a size of the view finder object, while displaying the view finder object on the composite image. The method may comprise, in response to a third input for shooting, storing, in the memory, a portion of the composite image corresponding to the view finder object, while displaying the view finder object on the composite image.

According to an example embodiment, a non-transitory computer-readable storage medium including instructions may be provided. The instructions, when executed by at least one processor, individually and/or collectively, of a wearable device comprising a housing, a display disposed on at least a portion of the housing and arranged in front of an eye of a user wearing the wearable device, and a plurality of cameras configured to obtain images with respect to at least a portion of an external environment of the wearable device, may cause the wearable device to display, on the display, a view finder object, superimposed on a composite image of the images. The instructions, when executed by at least one processor, may cause the wearable device to, in response to receiving an input for shooting while displaying the view finder object at a first position of the display, store a first portion of the composite image corresponding to the first position in the memory. The instructions, when executed by at least one processor, may cause the wearable device to, in response to receiving an input for shooting while displaying the view finder object at a second position of the display, store a second portion of the composite image corresponding to the second position in the memory.

According to an example embodiment, a wearable device may comprise: a housing, a display disposed on at least a portion of the housing and arranged in front of an eye of a user based on wearing the wearable device, a plurality of cameras configured to obtain images with respect to at least a portion of an external environment of the wearable device, memory storing instructions, and at least one processor, comprising processing circuitry. At least one processor, individually and/or collectively, may be configured to execute the instructions and may be configured to cause the wearable device to: display, on the display, a view finder object superimposed on a composite image of the images. At least one processor individually or collectively, may be configured to cause the wearable device to, in response to receiving an input for shooting while displaying the view finder object at a first position of the display, store a first portion of the composite image corresponding to the first position in the memory. At least one processor individually or collectively, may be configured to cause the wearable device to, in response to receiving an input for shooting while displaying the view finder object at a second position of the display, store a second portion of the composite image corresponding to the second position in the memory.

### [Description of the Drawings]

The above and other aspects, features and advantages of certain embodiments of the present disclosure will be more apparent from the following detailed description, taken in conjunction with the accompanying drawings, in which:
FIG. 1 is a diagram illustrating an example of a wearable device displaying a view finder object associated with a camera according to various embodiments;
FIG. 2 is a block diagram illustrating an example configuration of a wearable device according to various embodiments;
FIGS. 3A, 3B, and 3C are diagrams illustrating example operation of a wearable device displaying a view finder object according to various embodiments;
FIG. 4 is a flowchart illustrating an example operation of a wearable device according to various embodiments;
FIG. 5 is a diagram illustrating an example operation of a wearable device displaying a composite image with respect to images of a plurality of cameras according to various embodiments;
FIG. 6 is a diagram illustrating an example operation of a wearable device adjusting a focal length of at least one of a plurality of cameras according to various embodiments;
FIG. 7 is a flowchart illustrating an example operation of a wearable device according various embodiments;
FIGS. 8A, 8B, 8C, and 8D are diagrams illustrating example operations of a wearable device for adjusting a position and/or a size of a view finder object according to various embodiments;
FIG. 9 is a flowchart illustrating an example operation of a wearable device according to various embodiments;
FIGS. 10A, 10B, and 10C are diagrams illustrating an example operation of a wearable device obtaining an image and/or video according to various embodiments;
FIG. 11 is a flowchart illustrating an example operation of a wearable device according to various embodiments;
FIG. 12 is a diagram illustrating an example operation of a wearable device with respect to a control handle displayed together with a view finder object according to various embodiments;
FIG. 13 is a flowchart illustrating an example operation of a wearable device according to various embodiments;
FIGS. 14A and 14B are diagrams illustrating an example operation of a wearable device associated with a depth sensor according to various embodiments;
FIG. 15 is a flowchart illustrating an example operation of a wearable device according to various embodiments;
FIG. 16 is a diagram illustrating an example operation of a wearable device tracking an external object according to various embodiments;
FIG. 17 is a flowchart illustrating an example operation of a wearable device according to various embodiments;
FIGS. 18A and 18B are diagrams illustrating an example operation of a wearable device associated with a virtual object according to various embodiments;
FIG. 19 is a diagram illustrating an example operation of a wearable device obtaining a video according to various embodiments;
FIG. 20 is a flowchart illustrating an example operation of a wearable device according to various embodiments;
FIG. 21A is a perspective view of an example wearable device according to various embodiments;
FIG. 21B is a perspective view illustrating an example configuration of a wearable device according to various embodiments; and
FIGS. 22A and 22B are perspective views illustrating an example of an exterior of an example wearable device according to various embodiments.

### [Mode for Invention]

Hereinafter, various example embodiments of the disclosure will be described with reference to the accompanying drawings.

The various embodiments of the present disclosure and terms used herein are not intended to limit the technology described in the present disclosure to various example embodiments, and should be understood to include various modifications, equivalents, or substitutes of the corresponding embodiment. In relation to the description of the drawings, a reference numeral may be used for a similar component. A singular expression may include a plural expression unless it is clearly meant differently in the context. In the present disclosure, an expression such as "A or B", "at least one of A and/or B", "A, B or C", or "at least one of A, B and/or C", and the like may include all possible combinations of items listed together. Expressions such as "1st", "2nd", "first" or "second", and the like may modify the corresponding components regardless of order or importance, is only used to distinguish one component from another component, but does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module" used in the present disclosure may include a unit configured with hardware, software, or firmware, or any combination thereof, and may be used interchangeably with terms such as logic, logic block, component, or circuit, and the like, for example. The module may be an integrally configured component or a minimum unit or part thereof that performs one or more functions. For example, a module may be configured with an application-specific integrated circuit (ASIC).

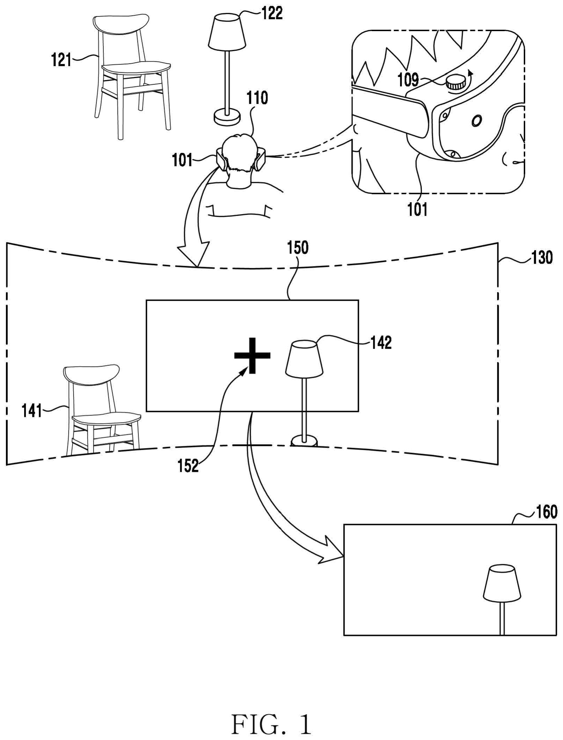

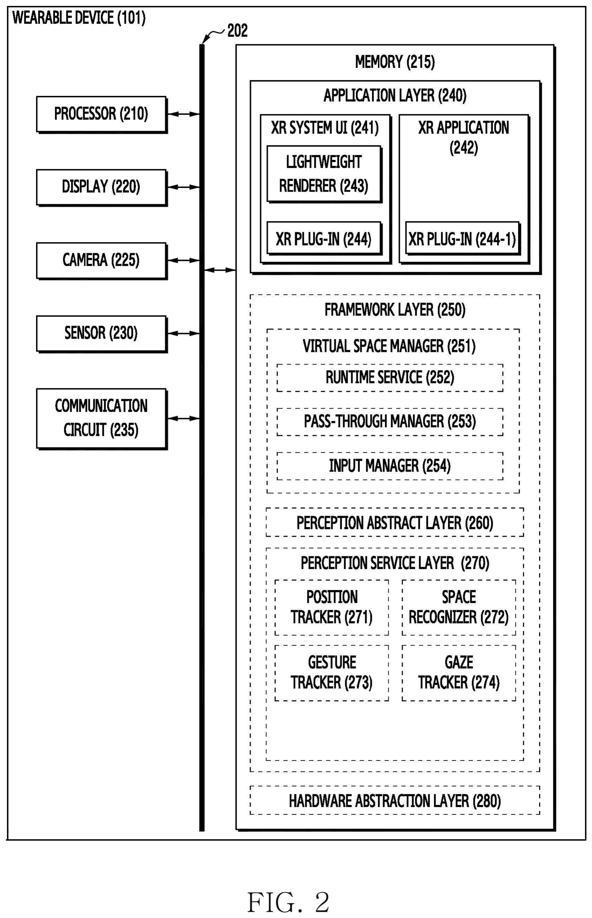

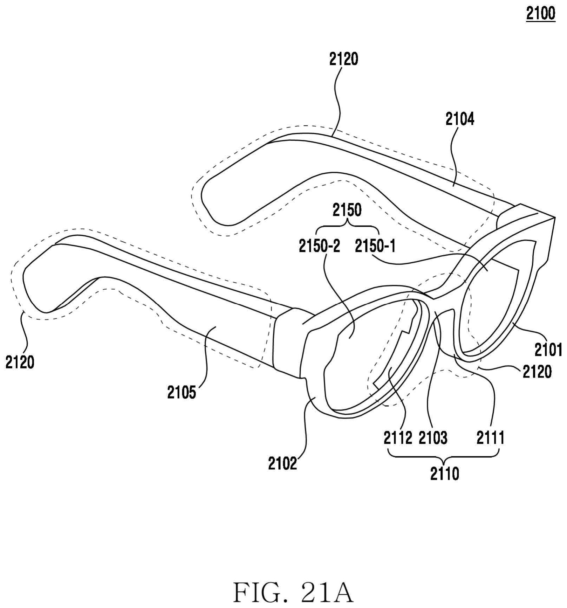

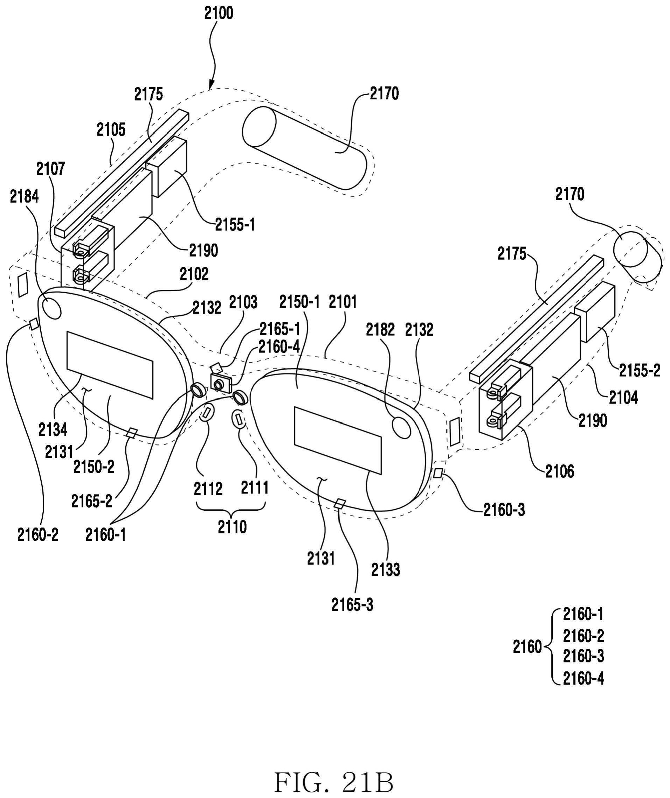

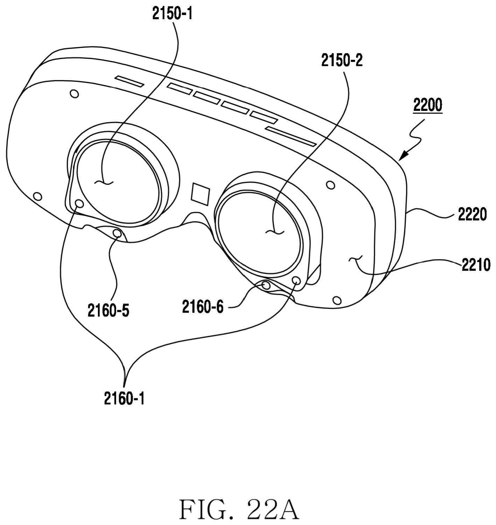

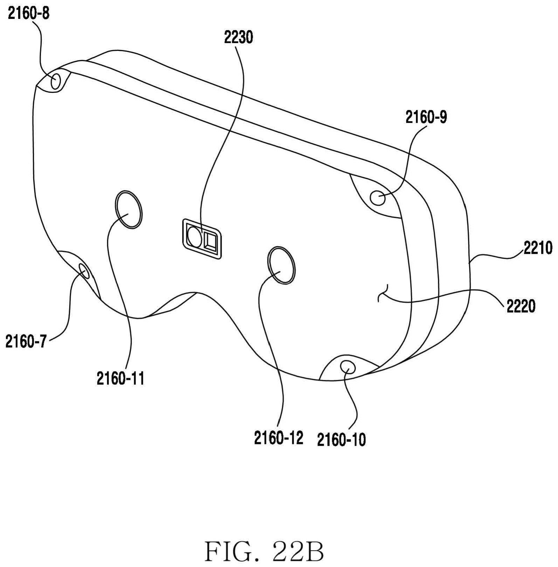

FIG. 1 is a diagram illustrating a wearable device 101 displaying a view finder object 150 associated with a camera according to various embodiments. The wearable device 101 may include a head-mounted display (HMD) wearable on a user's 110head. The wearable device 101 may be referred to as a head-mount display (HMD) device, a headgear electronic device, a glasses-type (or goggle-type) electronic device, a video see-through (or visible see-through (VST)) device, an extended reality (XR) device, a virtual reality (VR) device, and/or an augmented reality (AR) device, or the like. Although an external appearance of the wearable device 101 having a form of glasses is illustrated, the disclosure is not limited thereto. An example of a hardware configuration included in the wearable device 101 will be described with reference to FIG. 2. An example of a structure of the wearable device 101 wearable on the user's 110 head is described in greater detail below with reference to FIGS. 21A, 21B, 22A and/or 22B. The wearable device 101 may be referred to as an electronic device. For example, the electronic device may include an accessory (e.g., a strap) for being attached to the user's 110 head.

According to an embodiment, the wearable device 101 may execute a function associated with augmented reality (AR) and/or mixed reality (MR). For example, in a state that the user 110 wears the wearable device 101, the wearable device 101 may include at least one lens disposed adjacent to the user's 110 eye. The wearable device 101 may combine light emitted from a display of the wearable device 101 with ambient light passing through the lens. A displaying area of the display may be formed within a lens through which the ambient light passes. Since the wearable device 101 combines the ambient light and the light emitted from the display, the user 110 may look at an image in which a real object recognized by the ambient light and a virtual object formed by the light emitted from the display are mixed. The above-described augmented reality, mixed reality, and/or virtual reality may be referred to as extended reality (XR).

According to an embodiment, the wearable device 101 may execute a function associated with a video see-through (or visible see-through (VST)) and/or virtual reality (VR). For example, in a state that the user 110 wears the wearable device 101, the wearable device 101 may include a housing covering the user's 110 eye. The wearable device 101 may include a display disposed on a first surface of the housing facing the eye in the state. The wearable device 101 may include at least one display that forms at least a portion of the housing of the wearable device 101 to be arranged in front of the eye of the user 110 wearing the wearable device 101.

The wearable device 101 may include a camera disposed on a second surface opposite to the first surface. The wearable device 101 may include one or more cameras obtaining images with respect to at least a portion of an external environment. The wearable device 101 may include a plurality of cameras exposed through at least a portion of the housing of the wearable device 101 to obtain images (or videos) of at least a portion of the external environment. Using the camera, the wearable device 101 may obtain an image and/or video representing ambient light. The wearable device 101 may output the image and/or video within the display disposed on the first surface so that the user 110 recognizes the ambient light through the display. A displaying area (or active area) (or displaying region (or active region) of the display disposed on the first surface may be formed by one or more pixels included in the display. By synthesizing a virtual object with an image and/or video output through the display, the wearable device 101 may enable the user 110 to recognize the virtual object together with a real object recognized by the ambient light.

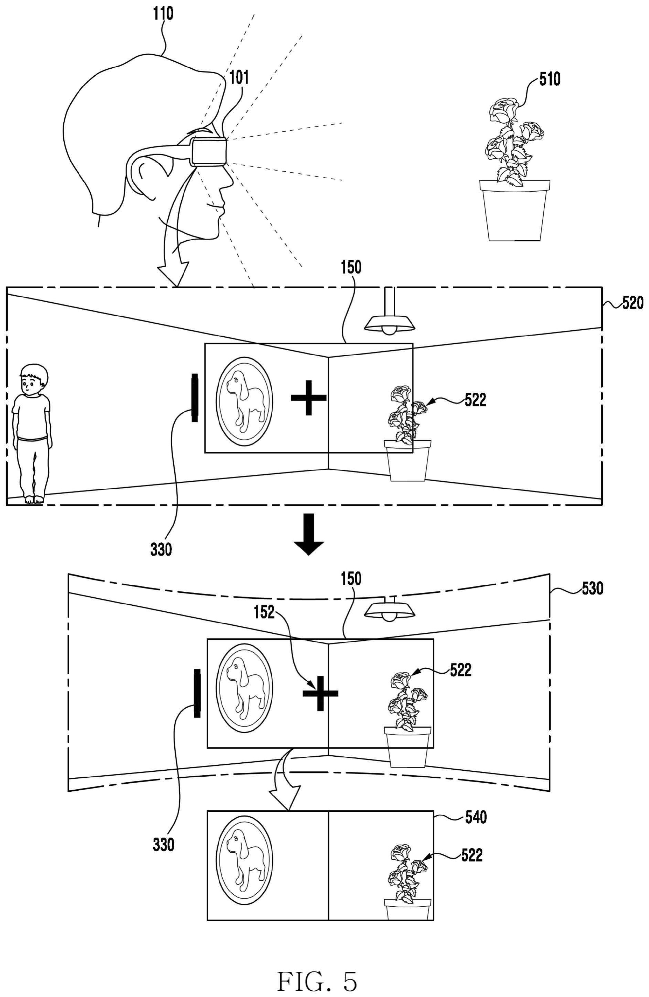

Referring to FIG. 1, an example state of the wearable device 101 providing a user experience associated with AR and/or VST is illustrated. The user 110 wearing the wearable device 101 may look at an external environment (e.g., an external environment including external objects such as a chair 121 and/or a lamp 122) through a display of the wearable device 101. Referring to FIG. 1, an example screen 130 including a visual object 141 corresponding to the chair 121 included in the external environment and a visual object 142 corresponding to the lamp 122 is illustrated. While the user 110 wearing the wearable device 101 stands toward the external environment including the chair 121 and the lamp 122, the wearable device 101 may display a screen 130 including visual objects 141 and 142 corresponding to the chair 121 and the lamp 122, respectively. In the screen 130, an image with respect to the external environment may be referred to as a background image and/or an outer image. An operation of the wearable device 101 displaying a background image associated with VST using one or more cameras will be described in greater detail below with reference to FIG. 5.

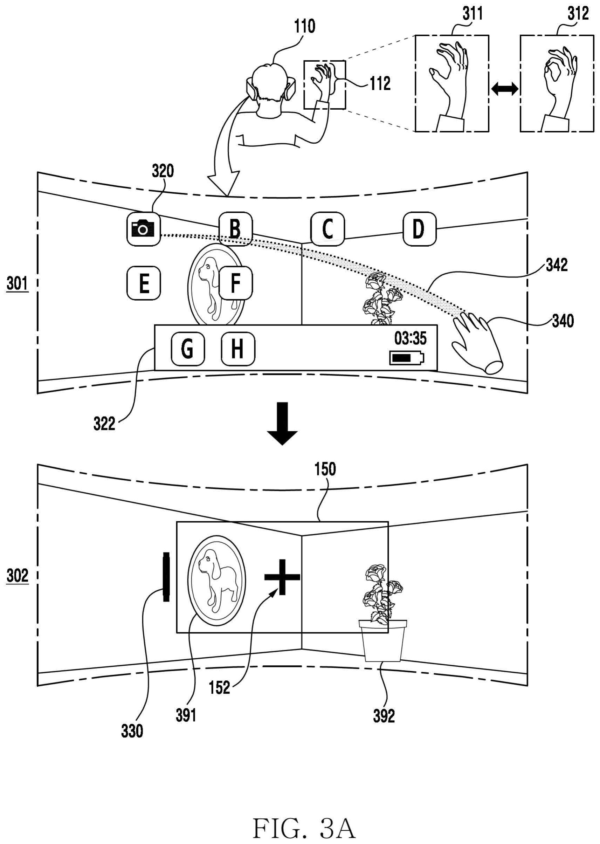

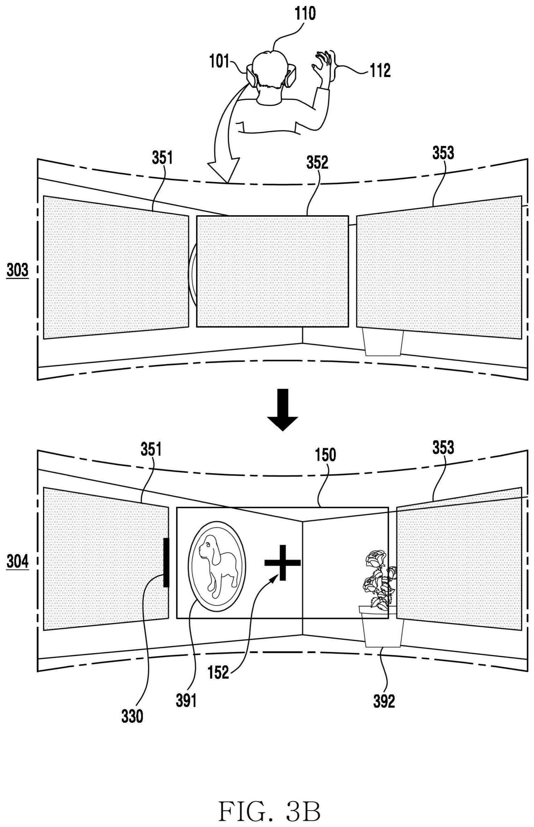

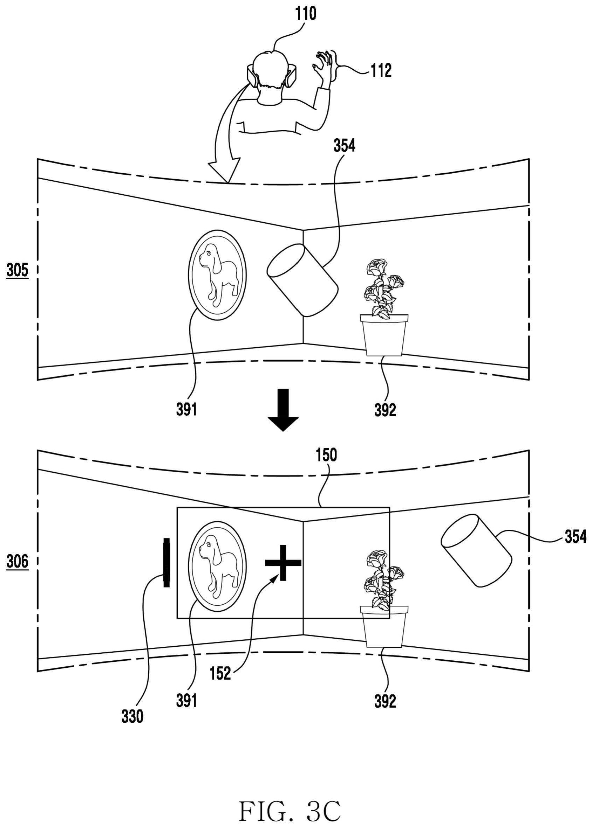

According to an embodiment, the wearable device 101 may display a user interface (UI) for controlling a camera that at least partially captures an external environment. For example, in the screen 130 including an image with respect to at least a portion of the external environment, the wearable device 101 may display a view finder object 150 superimposed on the image. An example operation of the wearable device 101 displaying the view finder object 150 will be described in greater detail below with reference to FIGS. 3A, 3B, and/or 3C. The view finder object 150 having a rectangular (or round-corner rectangle) shape may have a position and/or size linked to an external environment (or external space) displayed through the display of the wearable device 101. Using the view finder object 150, the wearable device 101 may guide capturing (or recording) of an external environment specified by the view finder object 150. For example, the wearable device 101 may obtain an image 160 and/or video, using the view finder object 150 superimposed on a background image associated with VST. In order to adjust a focal point (or focus) of the image 160 and/or video obtained using the view finder object 150, the wearable device 101 may display a visual object 152 inside the view finder object 150. For example, the image 160 obtained (or stored) by the wearable device 101 may include a portion corresponding to the view finder object 150 in the background image.

For example, without an additional panel, window (or activity in, for example, Android operating system), and/or virtual object, the wearable device 101 may guide a portion of an external environment corresponding to an image file and/or video file, using the view finder object 150 superimposed on a background image provided for VST. The wearable device 101 may obtain the image 160 and/or video with respect to the external environment corresponding to the view finder object 150, using a user's 110 motion (e.g., the user's 110 head, gaze, hand gesture and/or speech) associated with the view finder object 150. The motion of the user 110 may include a hand gesture of the user 110 spaced apart from the wearable device 101, a motion of the user 110 detected by an external electronic device (e.g., a remote controller) connected to the wearable device 101, and/or a motion of the user 110 associated with a dial 109 and/or a button exposed to the outside through a housing of the wearable device 101.

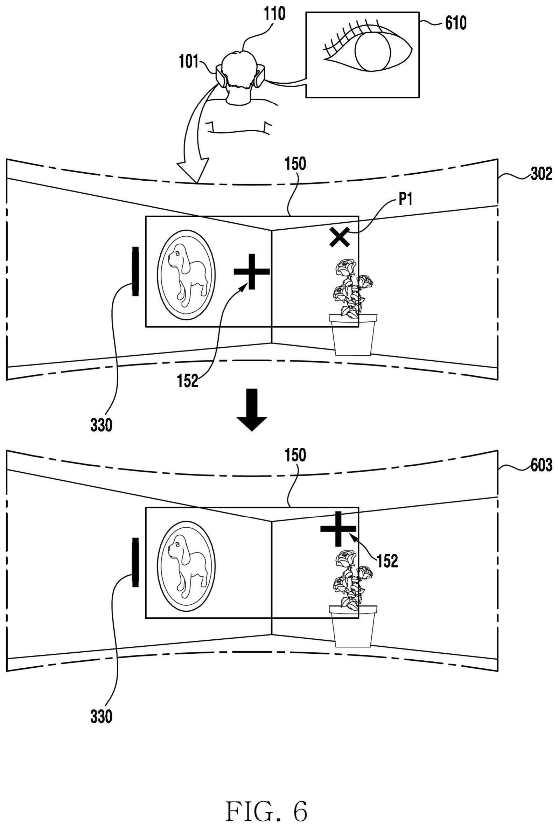

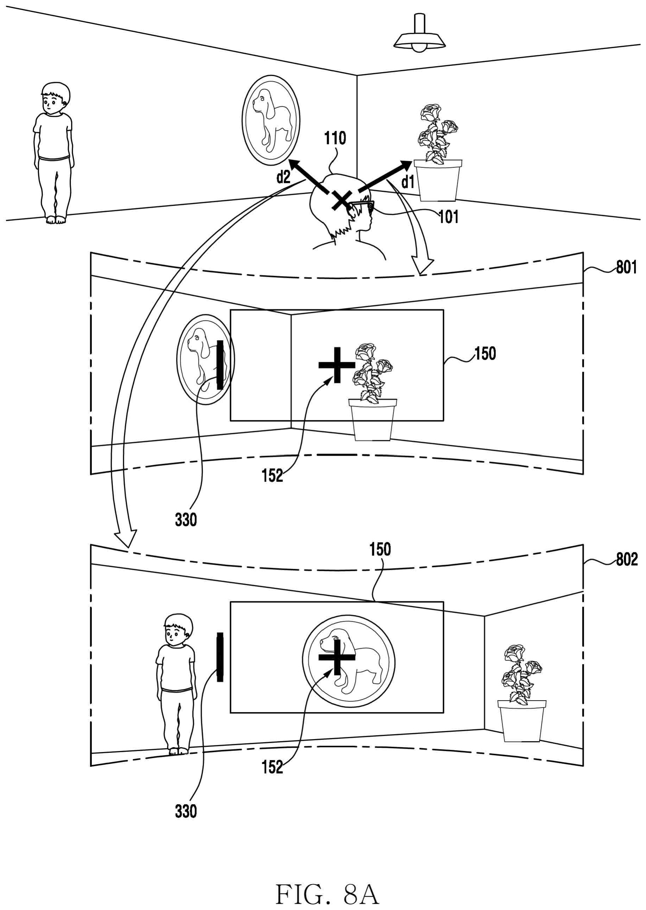

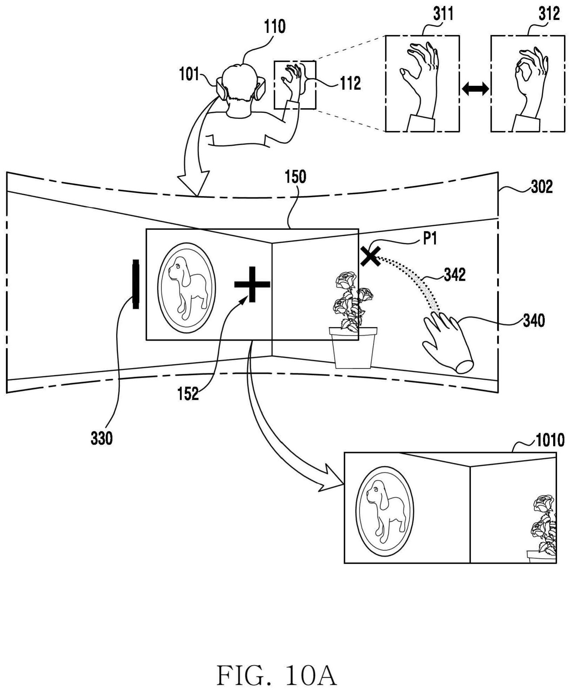

The wearable device 101 may execute a function associated with a camera, using the user's 110 motion associated with the view finder object 150. For example, an operation of the wearable device 101 adjusting a focal length of the camera using the user's 110 gaze toward the inside of the view finder object 150 will be described with reference to FIG. 6. An operation of the wearable device 101 adjusting a position and/or a size of the view finder object 150 using the motion of the user 110 will be described in greater detail below with reference to FIGS. 8A to 8D. An operation of the wearable device 101 obtaining an image 160 and/or a video in response to a motion of the user 110 will be described in greater detail below with reference to FIGS. 10A to 10C.

Hereinafter, an example hardware configuration of the wearable device 101 displaying the view finder object 150 will be described in greater detail with reference to FIG. 2.

FIG. 2 is a block diagram illustrating an example configuration of a wearable device 101 according to various embodiments. The wearable device 101 of FIG. 2 may include the wearable device 101 of FIG. 1.

Referring to FIG. 2, according to an embodiment, the wearable device 101 may include at least one of a processor (e.g., including processing circuitry) 210, memory 215, a display 220, a camera 225, a sensor 230, and/or a communication circuit 235. The processor 210, the memory 215, the display 220, the camera 225, the sensor 230, and/or the communication circuit 235 may be electrically and/or operably coupled with each other by an electronic component such as a communication bus 202. The type and/or number of hardware components included in the wearable device 101 is not limited as illustrated in FIG. 2. For example, the wearable device 101 may include only some of the hardware components illustrated in FIG. 2.

According to an embodiment, the processor 210 of the wearable device 101 may include a hardware component for processing data based on one or more instructions. For example, a hardware component for processing data may include an arithmetic and logic unit (ALU), a field programmable gate array (FPGA), a central processing unit (CPU), and/or an application processor (AP). In an embodiment, the wearable device 101 may include one or more processors. The processor 210 may have a structure of a multi-core processor such as a dual core, a quad core, a hexa core, and/or an octa core. The multi-core processor structure of the processor 210 may include a structure (e.g., a big-little structure) based on a plurality of core circuits, which are divided by power consumption, clock, and/or computational amount per unit time. In an embodiment including the processor 210 having the multi-core processor structure, operations and/or functions of the present disclosure may be collectively performed by one or more cores included in the processor 210. The processor 210 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

According to an embodiment, the memory 215 of the wearable device 101 may include a hardware component for storing data and/or instructions, which are inputted to the processor 210 and/or output from the processor 210. For example, the memory 215 may include a volatile memory such as a random-access memory (RAM) and/or a non-volatile memory such as a read-only memory (ROM). For example, the volatile memory may include at least one of a dynamic RAM (DRAM), a static RAM (SRAM), a Cache RAM, and a pseudo SRAM (PSRAM). For example, the non-volatile memory may include at least one of a programmable ROM (PROM), an erasable PROM (EPROM), an electrically erasable PROM (EEPROM), a flash memory, a hard disk, a compact disk, and an embedded multi-media card (eMMC). In an embodiment, the memory 215 may be referred to as storage.

In an embodiment, the display 220 of the wearable device 101 may output visualized information to a user (e.g., the user 110 of FIG. 1) of the wearable device 101. The display 220 arranged in front of eye of a user wearing the wearable device 101 may be disposed in at least a portion of a housing of the wearable device 101. For example, the display 220 may be configured to visualize information provided by the processor 210 including a circuit such as a graphic processing unit (GPU). The display 220 may include a flexible display, a flat panel display (FPD), and/or electronic paper. The display 220 may include a liquid crystal display (LCD), a plasma display panel (PDP), and/or light emitting diodes (LEDs). The LED may include an organic LED (OLED). The disclosure is not limited thereto, and for example, when the wearable device 101 includes a lens for penetrating ambient light (or external light), the display 220 may include a projector (or projection assembly) for projecting light onto the lens. In an embodiment, the display 220 may be referred to as a display panel and/or a display module. Pixels included in the display 220 may be disposed toward any one of the user's two eyes when the wearable device 101 is worn by the user. For example, the display 220 may include displaying areas (or active areas) corresponding to each of the user's two eyes.

In an embodiment, the camera 225 of the wearable device 101 may include optical sensors (e.g., a charged coupled device (CCD) sensor, a complementary metal oxide semiconductor (CMOS) sensor) that generate an electrical signal indicating color and/or brightness of light. The camera 225 may be referred to as an image sensor, and may be included in the sensor 230 of FIG. 2. A plurality of optical sensors included in the camera 225 may be disposed in a form of a 2-dimensional array. The camera 225 may generate 2-dimensional frame data corresponding to light reaching the optical sensors of the 2-dimensional array, by substantially simultaneously obtaining electrical signals of each of the plurality of optical sensors. For example, photo data captured using the camera 225 may refer, for example, to a 2-dimensional frame data obtained from the camera 225. For example, video data captured using the camera 225 may refer, for example, to a sequence of a plurality of 2-dimensional frame data obtained from the camera 225 according to a frame rate. The camera 225 may further include a flash light, which is disposed toward a direction in which the camera 225 receives light, for outputting light toward the direction.

According to an embodiment, the wearable device 101 may include, as an example of the camera 225, a plurality of cameras disposed in different directions. Referring to FIG. 2, the camera 225 included in the wearable device 101 may include a gaze tracking camera and/or an outward camera (or external camera). The gaze tracking camera may be disposed toward at least one of two eyes of the user wearing the wearable device 101. The processor 210 may identify a direction of the user's gaze using an image and/or a video obtained from the gaze tracking camera. The gaze tracking camera may include an infrared (IR) sensor. The gaze tracking camera may be referred to as an eye sensor, a gaze tracker, and/or an eye tracker.

For example, the outward camera may be disposed toward the front (e.g., a direction that can be faced by two eyes) of the user wearing the wearable device 101. The wearable device 101 may include a plurality of outward cameras. The disclosure is not limited thereto, and the outward camera may be disposed toward an external space. The processor 210 may identify an external object using an image and/or a video obtained from the outward camera. For example, the processor 210 may identify a position, shape, and/or gesture (e.g., hand gesture) of a hand of the user (e.g., the user 110 of FIG. 1) wearing the wearable device 101, based on an image and/or a vide obtained from the outward camera.

According to an embodiment, the sensor 230 of the wearable device 101 may generate electronic information capable of being processed and/or stored by the processor 210 and/or the memory 215 of the wearable device 101 from non-electronic information associated with the wearable device 101. The information may be referred to as sensor data. The sensor 230 may include a global positioning system (GPS) sensor for detecting a geographic position of the wearable device 101, an image sensor, an audio sensor (e.g., a microphone and/or a microphone array including a plurality of microphones), an illuminance sensor, an inertial measurement unit (IMU) (e.g., an acceleration sensor, a gyro sensor and/or a geomagnetic sensor), and/or a time-of-flight (ToF) sensor (or ToF camera). The wearable device 101 may include a sensor configured to detect a distance between the wearable device 101 and an external object, such as the ToF sensor. The sensor detecting the distance between the wearable device 101 and the external object may be referred to as a depth sensor.

In an embodiment, the depth sensor included in the wearable device 101 may include the ToF sensor and/or a structured light (SL) sensor. The SL sensor may be referred to as an SL camera. The ToF sensor may be referred to as a ToF camera. The SL sensor may emit or output a light pattern (e.g., a plurality of dots) of a specific wavelength (e.g., an infrared wavelength). When an external object reflects the light pattern, the light pattern may be distorted by embossing of a surface of the external object. By detecting reflected light with respect to the light pattern, the SL sensor and/or the processor 210 connected to the SL sensor may recognize the distortion.

The ToF sensor may emit light of a specific wavelength (e.g., an infrared wavelength) in units of nanoseconds. The ToF sensor may measure a time during which light reflected by the external object is propagated to the ToF sensor. Using the measured time, the ToF sensor and/or the processor 210 may calculate or determine the distance between the external object and the wearable device 101. Using the ToF sensor, the processor 210 may output light in different directions. Using the time during which reflected lights for each of the output lights is propagated to the ToF sensor, the processor 210 may detect distances between the wearable device 101 and external objects disposed in each of the directions. 2 dimensional distribution of the distances may be referred to as a depth map.

In an embodiment where the wearable device 101 includes the ToF sensor and the SL sensor, the processor 210 may use the SL sensor to detect an external object spaced apart from the wearable device 101 by less than a specified distance (e.g., 10 m), and may use the ToF sensor to detect an external object spaced apart from the wearable device 101 by the specified distance or more. However, the disclosure is not limited thereto.

In an embodiment, the communication circuit 235 of the wearable device 101 may include a circuit for supporting transmission and/or reception of an electrical signal between the wearable device 101 and an external electronic device. For example, the communication circuit 235 may include at least one of a MODEM, an antenna, and an optic/electronic (O/E) converter. The communication circuit 235 may support the transmission and/or reception of the electrical signal based on various types of protocols, such as ethernet, a local area network (LAN), a wide area network (WAN), a wireless fidelity (WiFi), Bluetooth, bluetooth low energy (BLE), ZigBee, long term evolution (LTE), 5G new radio (NR), 6G and/or above-6G. In an embodiment, the communication circuit 235 may be referred to as a communication processor and/or a communication module.

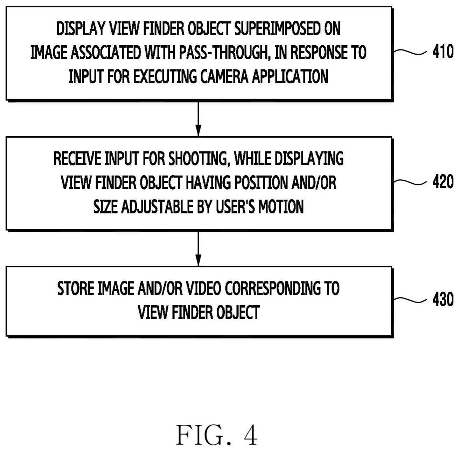

According to an embodiment, in the memory 215 of the wearable device 101, one or more instructions (or commands), which indicate data to be processed and calculations and/or operations to be performed by the processor 210 of the wearable device 101, may be stored. A set of one or more instructions may be referred to as a program, a firmware, an operating system, a process, a routine, a sub-routine, and/or a software application (hereinafter, "application"). For example, when a set of a plurality of instruction distributed in a form of an operating system, a firmware, a driver, a program, and/or an application is executed, the wearable device 101 and/or the processor 210 may perform at least one of operations of FIG. 4, FIG. 7, FIG. 9, FIG. 11, FIG. 13, FIG. 15, FIG. 17, and/or FIG. 20 described in greater detail below. Hereinafter, an application being installed in the wearable device 101, which is that one or more instructions provided in a form of an application are stored in the memory 215, may refer, for example, to the one or more applications being stored in an executable format (e.g., a file having an extension specified by the operating system of the wearable device 101) by the processor 210. For example, an application may include a program and/or a library associated with a service provided to a user.

Referring to FIG. 2, based on a target, programs installed in the wearable device 101 may be included in any one of different layers including an application layer 240, a framework layer 250, and/or a hardware abstraction layer (HAL) 280. For example, programs (e.g., module or driver) designed to target a hardware (e.g., the display 220, the camera 225, the sensor 230, and/or the communication circuit 235) of the wearable device may be included in the hardware abstraction layer 280. The framework layer 250 may be referred to as an XR framework layer in terms of including one or more programs for providing an extended reality (XR) service. For example, layers illustrated in FIG. 2 are logically (or for convenience of explanation) divided, and may not refer, for example, to an address space of the memory 215 being divided by the layers.

For example, programs (e.g., a position tracker 271, a space recognizer 272, a gesture tracker 273, and/or a gaze tracker 274) designed to target at least one of the hardware abstraction layer 280 and/or the application layer 240 may be included in the framework layer 250. The programs included in the framework layer 250 may provide an application programming interface (API) capable of being executed (or invoked (or called)) based on another program.

For example, a program designed for a user of the wearable device 101 may be included in the application layer 240. As an example of programs classified into the application layer 240, an extended reality (XR) system user interface (UI) 241 and/or an XR application 242 are illustrated, but the disclosure is not limited thereto. For example, programs (e.g., a software application) included in the application layer 240 may call an application programming interface (API) to cause execution of a function supported by programs classified into the framework layer 250.

For example, the wearable device 101 may display, on the display 220, one or more visual objects for performing interaction with the user, based on the execution of the XR system UI 241. A visual object may refer, for example, to an object, which is deployable within a screen, for transmission and/or interaction of information, such as text, image, icon, video, button, check box, radio button, text box, slider, and/or table. The visual object may be referred to as a visual guide, a virtual object, a visual element, a UI element, a view object, and/or a view element. The wearable device 101 may provide functions available in a virtual space to a user, based on the execution of the XR system UI 241.

Referring to FIG. 2, a lightweight renderer 243 and/or a XR plug-in 244 are illustrated to be included in the XR system UI 241, but are not limited thereto. For example, based on the XR system UI 241, the processor 210 may execute the lightweight renderer 243 and/or the XR plug-in 244 in the framework layer 250.

For example, based on the execution of the lightweight renderer 243, the wearable device 101 may obtain a resource (e.g., API, system process and/or library) used to define, generate, and/or execute a rendering pipeline capable of being partially changed. The lightweight renderer 243 may be referred to as a lightweight render pipeline in terms of defining the rendering pipeline capable of being partially changed. The lightweight renderer 243 may include a renderer (e.g., a prebuilt renderer) built before execution of a software application. For example, the wearable device 101 may obtain a resource (e.g., API, system process, and/or library) used to define, generate, and/or execute the entire rendering pipeline, based on the execution of the XR plug-in 244. The XR plug-in 244 may be referred to as an open XR native client in terms of defining (or setting) the entire rendering pipeline.

For example, the wearable device 101 may display a screen representing at least a portion of a virtual space on the display 220, based on the execution of the XR application 242. The XR plug-in 244-1 included in the XR application 242 may include instructions that support a function similar to the XR plug-in 244 of the XR system UI 241. Among descriptions of the XR plug-in 244-1, a description overlapping those of the XR plug-in 244 may be omitted. The wearable device 101 may cause execution of a virtual space manager 251 based on the execution of the XR application 242.

According to an embodiment, the wearable device 101 may provide a virtual space service based on the execution of the virtual space manager 251. For example, the virtual space manager 251 may include a platform for supporting a virtual space service. The wearable device 101 may identify, based on the execution of the virtual space manager 251, a virtual space formed based on a user's position indicated by data obtained through the sensor 230, and may display at least a portion of the virtual space on the display 220. The virtual space manager 251 may be referred to as a composition presentation manager (CPM).

For example, the virtual space manager 251 may include a runtime service 252. For example, the runtime service 252 may be referred to as an OpenXR runtime module (or an OpenXR runtime program). The wearable device 101 may execute at least one of a user's pose prediction function, a frame timing function, and/or a space input function, based on the execution of the runtime service 252. As an example, the wearable device 101 may perform rendering for a virtual space service to a user based on the execution of the runtime service 252. For example, based on the execution of the runtime service 252, a function associated with a virtual space, executable by the application layer 240, may be supported.

For example, the virtual space manager 251 may include a pass-through manager 253. While a screen (e.g., the screen 130 of FIG. 1) representing a virtual space is displayed on the display 220, the wearable device 101 may display an image and/or video representing an actual space obtained through an outward camera, superimposed on at least a portion of the screen, based on execution of the pass-through manager 253.

For example, the virtual space manager 251 may include an input manager 254. The wearable device 101 may identify data (e.g., sensor data) obtained by executing one or more programs included in a perception service layer 270, based on execution of the input manager 254. The wearable device 101 may identify a user input associated with the wearable device 101, using the obtained data. The user input may be associated with a motion (e.g., hand gesture), gaze and/or speech of the user, which are identified by the sensor 230 and/or the camera 225 (e.g., the outward camera). The user input may be identified based on an external electronic device connected (or paired) through the communication circuit 235.

For example, a perception abstract layer 260 may be used for data exchange between the virtual space manager 251 and the perception service layer 270. The perception abstract layer 260 may be referred to as an interface in terms of being used for data exchange between the virtual space manager 251 and the perception service layer 270. For example, the perception abstract layer 260 may be referred to as OpenPX. The perception abstract layer 260 may be used for a perception client and a perception service.

According to an embodiment, the perception service layer 270 may include one or more programs for processing data obtained from the sensor 230 and/or the camera 225. The one or more programs may include at least one of a position tracker 271, a space recognizer 272, a gesture tracker 273, and/or a gaze tracker 274. The type and/or number of one or more programs included in the perception service layer 270 is not limited to those illustrated in FIG. 2.

For example, the wearable device 101 may identify a posture of the wearable device 101 using the sensor 230, based on the execution of the position tracker 271. The wearable device 101 may identify a 6 degrees of freedom pose (6 dof pose) of the wearable device 101 using data obtained using the camera 225 and/or the IMU (e.g., gyro sensor, acceleration sensor and/or geomagnetic sensor), based on the execution of the position tracker 271. The position tracker 271 may be referred to as a head tracking (HeT) module (or a head tracker, a head tracking program).

For example, the wearable device 101 may obtain information for providing a 3-dimensional virtual space corresponding to an environment (e.g., external space) adjacent to the wearable device 101 (or a user of the wearable device 101), based on the execution of the space recognizer 272. Based on the execution of the space recognizer 272, the wearable device 101 may reconstruct the environment adjacent to the wearable device 101 in 3-dimensions, using data obtained using an outward camera. The wearable device 101 may identify at least one of a plane, a slope, and a step, based on the environment adjacent to the wearable device 101, which is reconstructed in 3-dimensions based on the execution of the space recognizer 272. The space recognizer 272 may be referred to as a scene understanding (SU) module (or a scene recognition program).

For example, the wearable device 101 may identify (or recognize) a pose and/or a gesture of the user's hand of the wearable device 101, based on the execution of the gesture tracker 273. For example, the wearable device 101 may identify a pose and/or a gesture of the user's hand, using data obtained from an outward camera, based on the execution of the gesture tracker 273. For example, the wearable device 101 may identify a pose and/or a gesture of the user's hand, based on data (or image) obtained using an outward camera, based on the execution of the gesture tracker 273. The gesture tracker 273 may be referred to as a hand tracking (HaT) module (or a hand tracking program) and/or a gesture tracking module.

For example, the wearable device 101 may identify (or track) movement of the user's eye of the wearable device 101, based on the execution of the gaze tracker 274. For example, the wearable device 101 may identify the movement of the user's eye using data obtained from the gaze tracking camera, based on the execution of the gaze tracker 274. The gaze tracker 274 may be referred to as an eye tracking (ET) module (or eye tracking program) and/or a gaze tracking module.

In an embodiment, the processor 210 of the wearable device 101 may display an image (e.g., the background image of the screen 130 of FIG. 1) of an external environment on the display 220, by executing the pass-through manager 253. In order to represent a portion of the external environment beyond the display 220, the processor 210 may display a composite image of images from outward cameras. The processor 210 may display a view finder object (e.g., the view finder object 150 of FIG. 1) on the composite image displayed in the display 220. While displaying the view finder object on the composite image, the processor 210 may receive or detect an input for moving or resizing the view finder object. In response to the input, the processor 210 may change at least one of a position and a size of the view finder object. While displaying the view finder object on the composite image, the processor 210 may receive or detect an input for shooting (hereinafter, a shooting input). In response to the shooting input, the processor 210 may store, in the memory 215, a portion of the composite image corresponding to the view finder object. In response to the shooting input, the processor 210 may store, in the memory 215, a portion of the composite image, which is associated with the view finder object or specified by the view finder object. The portion of the composite image may be stored in a form of an image and/or video.

A software application (e.g., a camera application) for obtaining an image and/or a video using a view finder object may be installed in the memory 215 of the wearable device 101. Hereinafter, an example operation of the wearable device 101 associated with a user input for executing the software application will be described in greater detail with reference to FIGS. 3A, 3B, and/or 3C.

FIGS. 3A, 3B, and 3C are diagrams illustrating an example operation of a wearable device 101 displaying a view finder object 150 according to various embodiments. The wearable device 101 of FIGS. 1 and 2 and/or the processor 210 of FIG. 2 may perform an operation of the wearable device 101 described with reference to FIGS. 3A, 3B and 3C (which may be referred to as FIGS. 3A to 3C).

Referring to FIGS. 3A to 3C, example screens 301, 302, 303, 304, 305, and 306 displayed by the wearable device 101 are illustrated. Referring to FIG. 3A, the wearable device 101 may display, on the screen 301, icons (e.g., B icon, C icon, D icon, E icon, and/or F icon) corresponding to each of a plurality of software applications installed in the wearable device 101. The screen 301, which is a screen for providing a list of the plurality of software applications installed in the wearable device 101, may be referred to as a home screen and/or a launcher screen. In the screen 301, the wearable device 101 may display a panel 322 for providing a list of frequently executed software applications. The panel 322 may be referred to as a dock. In the panel 322, the wearable device 101 may display icons (e.g., G icon and/or H icon) representing the frequently executed software applications. In the panel 322, the wearable device 101 may display the current time and/or information associated with a battery of the wearable device 101.

In the example screen 301 of FIG. 3A, the wearable device 101 may display an icon 320 corresponding to a software application (e.g., a camera application) for capturing an image and/or a video using a camera 225 (e.g., an outward camera) included in the wearable device 101, together with the icons. An embodiment in which the wearable device 101 displays the icon 320 representing a software application is described, but the disclosure is not limited thereto, and the wearable device 101 may display text, image, and/or video representing the software application.

In an embodiment, the wearable device 101 may receive an input for executing a camera application. The input may include an input for selecting the icon 320 representing the camera application in the screen 301. The input for selecting the icon 320 may include a hand gesture detected by a hand 112 of a user 110. For example, the wearable device 101 may obtain an image and/or video of a body part including the hand 112 of the user 110, using a camera (e.g., the camera 225 of FIG. 2 and/or the outward camera). The wearable device 101 detecting the hand 112 may display a virtual object 340 corresponding to the hand 112 on the screen 301. The virtual object 340 may include a three dimensional graphical object representing a pose of the hand 112. For example, a pose and/or a direction of the virtual object 340 may correspond to a pose and/or a direction of the hand 112 detected by the wearable device 101.

Referring to FIG. 3A, while displaying the virtual object 340, the wearable device 101 may display a virtual object 342 having a shape of a line extending from the virtual object 340. The virtual object 342 may be referred to as a ray, a ray object, a cursor, a pointer and/or a pointer object. The virtual object 342 may have a shape of a line extending from a portion (e.g., a palm and/or a specified finger such as an index finger) of the hand 112. Although the virtual object 342 having a curved shape is illustrated, the disclosure is not limited thereto. In the screen 301, the user 110 wearing the wearable device 101 may change the virtual object 342 and/or a position and/or a direction of the virtual object 340, by moving the hand 112.

Referring to FIG. 3A, while the virtual object 342 having a line shape displays an example screen 301 extending toward the icon 320, the wearable device 101 may detect or identify a pinch gesture of the hand 112. For example, after obtaining an image 311 of the hand 112 in which fingertips of all fingers included in the hand 112 are spaced apart from each other, the wearable device 101 may obtain an image 312 of the hand 112 including at least two fingers in which the at least two fingertips (e.g., a fingertip of the thumb and a fingertip of the index finger) are in contact with each other to form a ring shape. The wearable device 101 obtaining the image 312 may detect a pinch gesture represented by at least two fingers having a ring shape. The duration of the pinch gesture may refer, for example, to a time in which fingertips of at least two fingers of the hand 112 are in contact with each other, as illustrated in the image 312. The pinch gesture may correspond, or be mapped to a click and/or a tap gesture.

For example, in response to a pinch gesture detected while displaying the screen 301 including the virtual object 342 extending toward the icon 320, the wearable device 101 may execute a camera application corresponding to the icon 320. An example operation of executing a camera application using a hand gesture such as a pinch gesture is described, but the disclosure is not limited thereto. For example, the wearable device 101 may execute the camera application in response to a user's speech (e.g., "Let's run the camera application") and/or rotation and/or pressing of a dial (e.g., the dial 109 of FIG. 1).

Referring to FIG. 3A, an example screen 302 displayed by the wearable device 101 executing a camera application is illustrated. Referring to the screen 302, in response to an input for executing a camera application, the wearable device 101 may display a view finder object 150 on a composite image of outward cameras. For example, the wearable device 101 may provide a user experience similar to the user 110 looking an external environment, by displaying a composite image including visual objects (e.g., a visual object 391 corresponding to a dog picture, and a visual object 392 corresponding to a pot) corresponding to external objects included in the external environment. Referring to FIG. 3A, the view finder object 150 having a rectangular shape surrounding the visual object 391 in the composite image is illustrated.

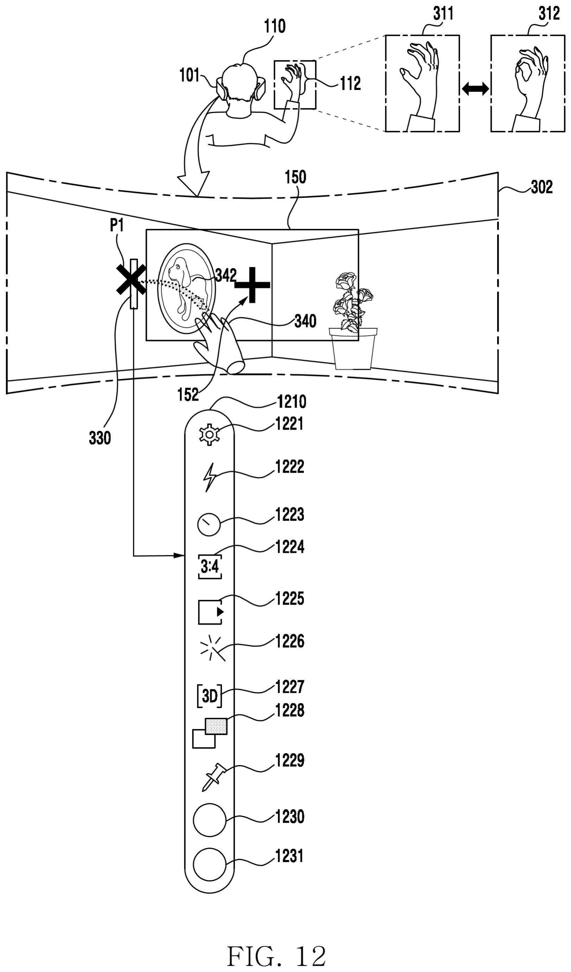

In an embodiment, the wearable device 101 may display a visual object 152 associated with a focal length inside the view finder object 150. The wearable device 101 may display a control handle 330 at a position adjacent to the view finder object 150. Although the control handle 330 adjacent to a right side of the view finder object 150 is illustrated, a position, a size, and/or a shape of the control handle 330 are not limited thereto. Functions executable using the control handle 330 will be described in greater detail below with reference to FIGS. 12 to 18B. The control handle 330 may be referred to as a handle object.

In an embodiment, the wearable device 101 may execute a plurality of software applications substantially simultaneously (e.g., multitasking). Referring to FIG. 3B, the wearable device 101 may display a screen 303 including virtual objects 351, 352, and 353 provided from one or more software applications. Each of the virtual objects 351, 352, and 353 may be a two dimensional panel provided by execution of a software application. While displaying a composite image based on VST, the wearable device 101 may display the virtual objects 351, 352, and 353 superimposed on the composite image. While displaying the screen 303, the wearable device 101 may receive or detect an input for executing a camera application. In response to the input, the wearable device 101 may display the view finder object 150 superimposed on the composite image, such as a screen 304.

In order to display the view finder object 150 superimposed on the composite image, the wearable device 101 may cease to display at least one of the virtual objects 351, 352, and 353, which was displayed before executing the camera application (or before displaying the view finder object 150), or may hide it. For example, in response to an input for executing a camera application, a virtual object 352, which is disposed at a position where the view finder object 150 provided by the camera application is to be displayed, may be removed from the screen 304, or may be displayed with specified transparency (or opacity) (e.g., transparency less than or equal to 100%). For example, a portion of the virtual object 353 superimposed on the view finder object 150, may be removed from the screen 304, or may be displayed with specified transparency (e.g., transparency less than or equal to 100%). When the view finder object 150 is moved in the screen 304, the wearable device 101 may remove another virtual object superimposed on the view finder object 150, or may adjust (or set) transparency of the other virtual object to specified transparency.

Referring to FIG. 3C, the wearable device 101 may display a screen 305 including a virtual object 354. While displaying the screen 305, the wearable device 101 receiving an input for executing a camera application may display the view finder object 150. Referring to an example screen 306 of FIG. 3C, in the screen 306, the wearable device 101 detecting the virtual object 354 disposed on a position where the view finder object 150 is to be displayed may move the virtual object 354 to a position on which the view finder object 150 is not superimposed. For example, in the screen 306, the virtual object 354 may be disposed in another area different from the area inside the view finder object 150. Since the virtual object 354 is disposed on a portion of the screen 306 that is the outside of the view finder object 150, the user 110 wearing the wearable device 101 may accurately recognize an external environment to be captured by the view finder object 150.

Hereinafter, an example operation of the wearable device 101 displaying the view finder object 150 will be described in greater detail with reference to FIG. 4.

FIG. 4 is a flowchart illustrating an example operation of a wearable device according to various embodiments. The wearable device 101 of FIGS. 1 and 2 and/or the processor 210 of FIG. 2 may perform an operation of a wearable device described with reference to FIG. 4. An operation of the wearable device of FIG. 4 may be associated with the operation of the wearable device 101 described with reference to FIGS. 3A to 3C. Instructions stored in memory (e.g., the memory 215 of FIG. 2) of the wearable device, when executed by a processor of the wearable device (or the processor itself may be configured to cause), may cause the wearable device to perform an operation of FIG. 4.

Referring to FIG. 4, in operation 410, the processor of the wearable device according to an embodiment may display a view finder object superimposed on an image associated with a pass-through, in response to an input for executing a camera application. The image associated with the pass-through may include a composite image of images of cameras (e.g., the camera 225 of FIG. 2) of the wearable device. The image associated with the pass-through may be displayed to maintain visibility of an external environment beyond a display disposed in front of eye of a user wearing the wearable device. The processor may display one or more virtual objects combined with the real environment, by displaying the one or more virtual objects superimposed on an image of operation 410. The input of operation 410 may include the input, described with reference to FIGS. 3A to 3C, for executing a camera application.

In an embodiment, the processor may guide at least a portion to be captured by a user input within the image for the real environment, using an image in which the view finder object is overlaid. The input of operation 410 may be identified or detected by a hand gesture (e.g., pinch gesture) associated with a virtual object (e.g., the icon 320 of FIG. 3A) representing a camera application. In response to the input of operation 410, the wearable device may display a composite image of images of outward cameras and a view finder object (e.g., the view finder object 150 of FIG. 1) superimposed on the composite image. When the wearable device includes a plurality of outward cameras, the processor may synthesize (e.g., stitch) images of the plurality of outward cameras to obtain or generate a composite image of the images. An operation in which by a processor displays a composite image will be described with reference to FIG. 5.

Referring to FIG. 4, in operation 420, the processor of the wearable device according to an embodiment may receive an input for shooting, while displaying a view finder object having a position and/or size adjustable by a user's motion. The input of operation 420 may include a shooting input. The position and/or size of the view finder object in operation 420 within the display may be changed by an example input described with reference to FIGS. 8A to 8D. The position of the view finder object may be moved three-dimensionally in a virtual space. For example, the processor may move or adjust the position and/or size of the view finder object along x-axis, y-axis, and/or z-axis.

Before receiving the input of operation 420, the processor may detect another input for executing a function associated with the view finder object. The other input may include an input for obtaining depth information (e.g., a depth map) using a depth sensor. The other input may include an input for combining or synthesizing one or more virtual objects displayed on the display to an image and/or video with respect to an external environment obtained through the camera. The other input may include an input for obtaining an image and/or video associated with an external object by tracking the external object.

Referring to FIG. 4, in operation 430, the processor of the wearable device according to an embodiment may store an image and/or video corresponding to the view finder object. In response to an input for shooting in operation 420, the processor may perform operation 430. The processor displaying the view finder object on the image of operation 410 may perform operation 430 to obtain or store an image and/or video including at least a portion of the image of operation 410. When an image is obtained in response to the input of operation 420, the processor may store an image corresponding to the view finder object at a time point of receiving the input of operation 420. When obtaining a video in response to the input of operation 420, the processor may initiate obtaining a video corresponding to the view finder object from the time point of receiving the input of operation 420. The video obtained from the time point may be completed by an additional input for stopping recording of the video.

Hereinafter, an example operation of a wearable device displaying an image associated with the pass-through of operation 410 and a view finder object superimposed on the image will be described in greater detail with reference to FIG. 5.

FIG. 5 is a diagram illustrating an example operation of a wearable device 101 for displaying a composite image 520 with respect to images of a plurality of cameras according to various embodiments. The wearable device 101 of FIGS. 1 and 2 and/or the processor 210 of FIG. 2 may perform an operation of the wearable device 101 described with reference to FIG. 5. The operation of the wearable device 101 described with reference to FIG. 5 may be associated with at least one (e.g., operation 410) of the operations of FIG. 4.

Referring to FIG. 5, an example state of the wearable device 101 disposed toward an external space including an external object such as a pot 510 is illustrated. In the example state of FIG. 5, the wearable device 101 may obtain an image and/or video with respect to the external space, using one or more cameras (e.g., the camera 225 of FIG. 2). In an embodiment including a plurality of outward cameras, a composite image 520 with respect to an external space may be obtained or generated by synthesizing images of the plurality of outward cameras.

Referring to an example composite image 520 of FIG. 5, the composite image 520 may represent at least a portion of an external space including the front of the wearable device 101. The wearable device 101 may generate the composite image 520, by combining the images of the plurality of outward cameras with different field-of-views (FoV) and/or different directions on a virtual two-dimensional plane and/or a three-dimensional curved surface. The plane and/or the curved surface in which the composite image 520 is generated may be referred to as a skybox. The composite image 520 may be used to provide a background image and/or an outer image.

The composite image 520 generated by the wearable device 101 may be displayed on a display (e.g., the display 220 of FIG. 2) to provide a user experience associated with VST. Referring to FIG. 5, an example screen 530 including at least a portion of the composite image 520 is illustrated. In an embodiment in which the display of the wearable device 101 includes displaying areas facing each of the user's two eyes, the screen 530 may be displayed on at least one of the displaying areas. A position in which the composite image 520 is displayed in the display and/or a size of the composite image 520 may be associated with a positional relationship between the wearable device 101 and the external space. In the screen 530 including at least a portion of the composite image 520, a position, a size, and/or a distance (e.g., binocular disparity) of a visual object 522 corresponding to the pot 510 may correspond to each of a position, a size, and/or a distance of the pot 510 looked from the position of the wearable device 101, respectively.

The disclosure is not limited thereto, and in an embodiment including one outward camera, the wearable device 101 may display a screen 530 having an image of the one outward camera as a background image. In an embodiment including one outward camera, the outward camera may be disposed toward the front of the user 110 wearing the wearable device 101, or may be disposed toward at least a portion of an external space including the front.

In the screen 530 of FIG. 5, the wearable device 101 may receive or detect an input for executing the camera application described above with reference to FIGS. 3A to 3C. In response to the input, the wearable device 101 may display the view finder object 150 on the screen 530. The view finder object 150 may be superimposed on a portion of the composite image 520 included in the screen 530, in order to guide an image and/or video to be obtained by a shooting input. In response to the shooting input, the wearable device 101 may store a portion of the composite image 520 corresponding to the view finder object 150 as an image 540. Referring to the example image 540 of FIG. 5, a portion of an external space represented by the image 540 may be matched to a portion of the composite image 520 specified by the view finder object 150. The disclosure is not limited thereto, and the wearable device 101 may obtain or store a video by performing video recording on a portion of the composite image 520 corresponding to the view finder object 150, in response to the shooting input.

As described above, according to an embodiment, the wearable device 101 may customize at least a portion to be stored in the image 540 (or video) within the composite image 520, using the view finder object 150. Hereinafter, an example operation of the wearable device 101 adjusting a focal length of at least one camera included in the wearable device 101 before receiving a shooting input will be described in greater detail with reference to FIG. 6.

FIG. 6 is a diagram illustrating an example operation of a wearable device 101 adjusting a focal length of at least one of a plurality of cameras according to various embodiments. The wearable device 101 of FIGS. 1 and 2 and/or the processor 210 of FIG. 2 may perform an operation of the wearable device 101 described with reference to FIG. 6. The operation of the wearable device 101 described with reference to FIG. 6 may be associated with at least one of the operations of FIG. 4.

Referring to FIG. 6, screens 302 and 603 displayed by the wearable device 101 executing a camera application are illustrated. The screen 302 of FIG. 6 may correspond to the screen 302 of FIG. 3A. According to an embodiment, the wearable device 101 may obtain an image 610 of at least one eye of a user 110 wearing the wearable device 101, using a camera (e.g., the camera 225 of FIG. 2 and/or a gaze tracking camera). For example, the camera may be disposed to face the user's 110 eye. Using feature points (or key points) included in the image 610, or using a neural network trained to obtain information associated with eye, the wearable device 101 may determine or identify a direction of the at least one eye (e.g., a direction of a gaze) from the image 610. While wearing the wearable device 101, two eyes of the user 110 may face a specific point of the display covering the two eyes. The wearable device 101 may calculate or identify a direction of a gaze facing the specific point, using the image 610.

Referring to FIG. 6, while displaying the screen 302, the wearable device 101 may determine a direction of an eye facing a point p1 within the screen 302, using the image 610. Referring to FIG. 6, the wearable device 101 that detects a direction facing a portion of a composite image specified by the view finder object 150 may change at least one focal length of a plurality of cameras that obtain the composite image, using a portion of the external environment corresponding to the direction. For example, the wearable device 101 that detects a direction of a gaze toward a point p1 within the view finder object 150 may change a focal length of at least one of outward cameras, using an external object disposed in a direction of the wearable device 101 corresponding to the point p1.

Referring to FIG. 6, an example screen 603 displayed by the wearable device 101 after changing the focal length using the direction of the gaze toward the point p1 is illustrated. The wearable device 101 may move a visual object 152 having a cross line shape to the point p1. In the screen 603, a center of the visual object 152 having the cross line shape may correspond to the point p1 in the display where two eyes of the user 110 wearing the wearable device 101 face. The wearable device 101 may control at least one (e.g., a camera associated with a portion of the composite image corresponding to the view finder object 150) of outward cameras, in order to have a focal length corresponding to an external object (e.g., an external object visible at the point p1 of the composite image displayed through the display) corresponding to the point p1. Since a focal length of at least one of cameras driven to display the composite image is changed based on the point p1, in the screen 603, an external object (e.g., a wall surface) associated with the point p1 may be clearly visible, and other external objects (e.g., a pot and/or a picture of animal) except for the external object may be blurry visible.

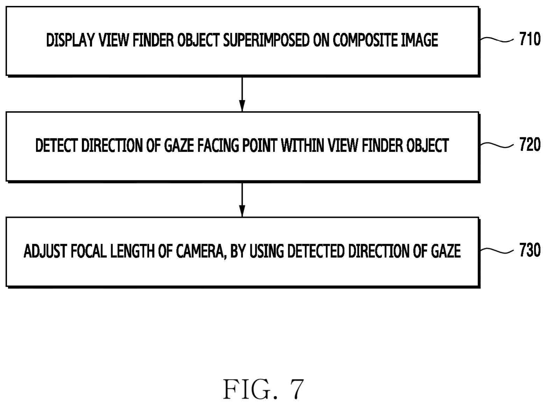

As described above, the wearable device 101 may change a focal length of at least one camera driven to provide an external space, using a direction of a gaze facing the point p1 within the view finder object 150. Hereinafter, referring to FIG. 7, an example operation of the wearable device 101 described with reference to FIG. 6 will be described in greater detail.

FIG. 7 is a flowchart illustrating an example operation of a wearable device according to various embodiments. The wearable device 101 of FIGS. 1 and 2 and/or the processor 210 of FIG. 2 may perform an operation of the wearable device described with reference to FIG. 7. The operation of the wearable device of FIG. 7 may be associated with the operation of the wearable device 101 described with reference to FIG. 6. Instructions stored in memory (e.g., the memory 215 of FIG. 2) of the wearable device, when executed by a processor of the wearable device, may cause the wearable device to perform the operation of FIG. 7.

Referring to FIG. 7, in operation 710, the processor of the wearable device according to an embodiment may display a view finder object (e.g., the view finder object 150 of FIG. 1 and/or FIG. 6) superimposed on a composite image (e.g., the composite image 520 of FIG. 5). The processor may display the view finder object by performing operation 710 of FIG. 7, similarly to operation 410 of FIG. 4.

Referring to FIG. 7, in operation 720, the processor of the wearable device according to an embodiment may detect a direction of a gaze facing a point within the view finder object. The processor may detect the direction of operation 720 using a camera (e.g., a gaze tracking camera) for gaze tracking. For example, the processor may detect the direction of the gaze using the image 610 of FIG. 6. When the direction of the gaze is directed to a point (e.g., the point p1 of FIG. 6) within the view finder object, the processor may perform an operation of controlling at least one camera using the gaze.

Referring to FIG. 7, in operation 730, the processor of the wearable device according to an embodiment may adjust a focal length of the camera using the detected direction of the gaze. The processor may change the focal length of operation 730 using a distance between an agent and an external object disposed in the direction of the gaze. While, before, or after performing operation 730, the processor may move a position of a visual object (e.g., the visual object 152 of FIG. 1 and/or FIG. 6) associated with the focal length to a position within the display (or position within the view finder object) superimposed with the direction of operation 720.

In response to a shooting input received after adjusting the focal length of operation 730, the processor of the wearable device may store a portion of a composite image corresponding to the view finder object in an image and/or video format. In response to the shooting input, the processor may store an image and/or video having the adjusted focal length of operation 730.

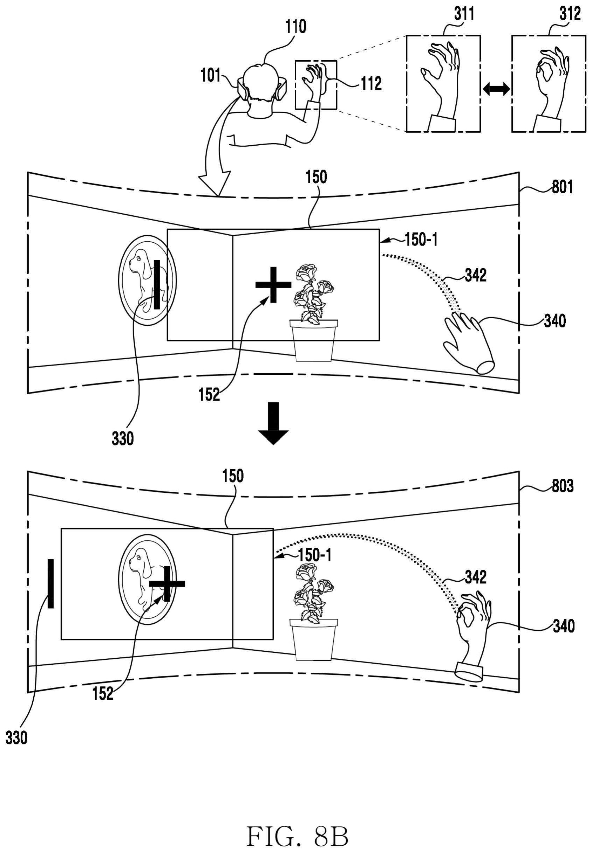

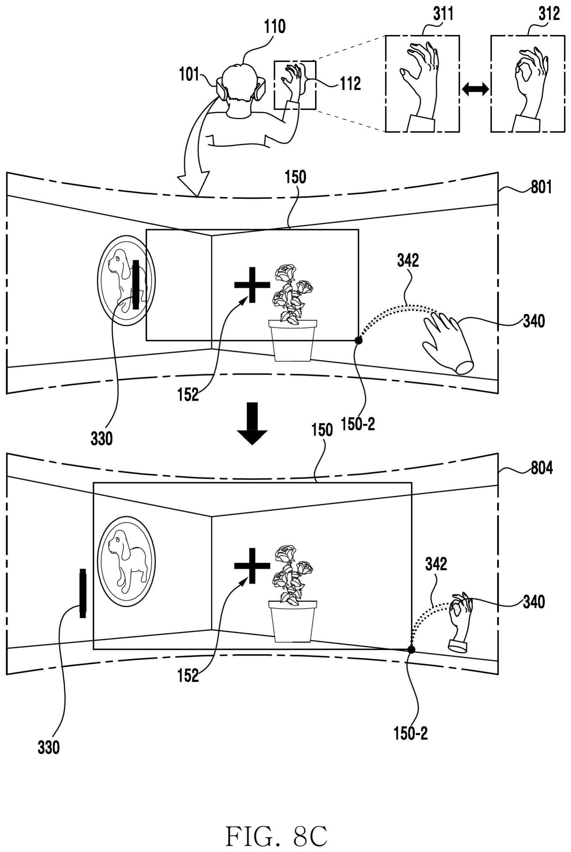

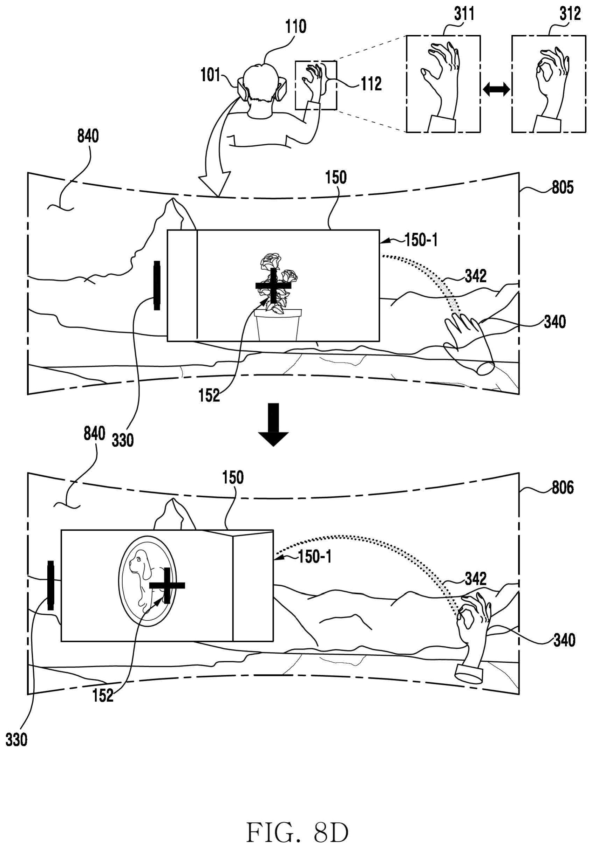

Hereinafter, an example operation of a wearable device adjusting a position and/or a size of a view finder object within a display will be described in greater detail with reference to FIGS. 8A, 8B, 8C and 8D (which may be referred to as FIGS. 8A to 8D) and/or 9.

FIGS. 8A, 8B, 8C, and 8D are diagrams illustrating an example operation of a wearable device for adjusting a position and/or a size of a view finder object 150 according to various embodiments. The wearable device 101 and/or the processor 210 of FIGS. 1 to 2 may perform an operation of the wearable device 101 described with reference to FIGS. 8A to 8D.

Referring to FIGS. 8A to 8D, screens 801, 802, 803, 804, 805, and 806 displayed by the wearable device 101 executing a camera application are illustrated. The wearable device 101 executing the camera application may display the view finder object 150 superimposed on a composite image (e.g., the composite image 520 of FIG. 2). Referring to the example screen 801 of FIG. 8A, while a user 110 wearing the wearable device 101 looks in a direction d1, the wearable device 101 may display the view finder object 150 superimposed on a composite image representing a portion of an external space corresponding to the direction d1.

The view finder object 150 may be anchored at a specific point (e.g., a center point of the display) of the screen 801 (or the display). For example, when a direction d1 of the user's 110 head changes, a portion of the composite image superimposed with the view finder object 150 anchored to a specific point of the display may be changed, and a position and/or size of the view finder object 150 may be maintained within the display. Referring to FIG. 8A, while displaying the screen 801, when the user 110 rotates their head in a direction d2, the wearable device 101 may display a composite image associated with the direction d2.

For example, within the screen 802 displayed while the user 110 looks in the direction d2, the wearable device 101 may display the view finder object 150 centered on the screen 802. Referring to the screens 801 and 802, while the head of the user 110 rotates, the wearable device 101 may maintain the position and/or size of the view finder object 150 on the display. For example, the view finder object 150 may have 0 degree of freedom (DoF) and follow FoV of the user 110.

A reference position and/or size of the view finder object 150 on the display may be changed by a user input associated with the view finder object 150. Referring to FIG. 8B, the wearable device 101 detecting a body part including a hand 112 of the user 110 may display a virtual object 340 corresponding to the hand 112 within the screen 801. The wearable device 101 may display a virtual object 342 (e.g., a pointer object) extending from a point (e.g., a point where the virtual object 340 is displayed) of a composite image associated with a body part including the hand 112, together with the virtual object 340. The wearable device 101 may change the position and/or direction of the virtual objects 340 and 342 in the screen 801, using a direction and/or position of the hand 112.

Referring to FIG. 8B, while displaying the virtual object 342 facing a boundary line 150-1 of the view finder object 150, the wearable device 101 may detect or receive an input for moving the view finder object 150 using a shape of the hand 112. For example, while a direction of the virtual object 342 corresponding to a direction of the hand 112 faces the boundary line 150-1, the wearable device 101 may continuously obtain images 311 and 312. The wearable device 101 may detect a pinch gesture of the hand 112 using the continuously obtained images 311 and 312. For example, the input of moving the view finder object 150 may be detected by both the direction of the hand 112 facing the boundary line 150-1 of the view finder object 150 and the pinch gesture of the hand 112.

Referring to FIG. 8B, the wearable device 101 receiving an input of moving the view finder object 150 may change the position of the view finder object 150, using the position and/or direction of the hand 112. For example, while the hand 112 of the user 110, which is a right hand, moves from the right to the left of the user 110, the wearable device 101 may display the view finder object 150 moved to the left, such as the screen 802. While a shape of the hand 112 maintains a shape of the pinch gesture, the wearable device 101 may move the view finder object 150 along the position and/or direction of the hand 112.

The wearable device 101 may move three-dimensionally the view finder object 150, along a path of the hand 112 maintaining the pinch gesture. For example, the wearable device 101 may cause the view finder object 150 to move away from or approach the wearable device 101, by adjusting the binocular disparity and/or a depth value, as well as a horizontal direction and/or a vertical direction of the display. When the view finder object 150 is moved away from the wearable device 101 by the hand 112 maintaining the pinch gesture, the size of the view finder object 150 displayed through the display may be reduced. When the view finder object 150 approaches the wearable device 101 by the hand 112 maintaining the pinch gesture, the size of the view finder object 150 displayed through the display may be enlarged.

While moving the view finder object 150 using a direction of the virtual object 342 corresponding to the hand 112 maintaining the pinch gesture, the wearable device 101 may detect or determine whether a shape of the hand 112 is changed to a shape different from the pinch gesture. For example, when two fingers in contact with each other for the pinch gesture are separated, the wearable device 101 may cease moving the view finder object 150 along the path of the hand 112. The view finder object 150 may be anchored to a position in the display at a time point at which ceasing of the pinch gesture is identified. For example, when the user's 110 head rotates after the view finder object 150 is anchored back to a specific position at the time point, the wearable device 101 may maintain a position of the view finder object 150 in the display at the specific position.

In an embodiment, the wearable device 101 may detect or receive an input for resizing the view finder object 150. Referring to the example screen 801 of FIG. 8C, the wearable device 101 may detect the pinch gesture of the hand 112 while displaying the virtual object 342 facing a vertex 150-2 of the view finder object 150 from the virtual object 340 along the direction of the hand 112. In response to the pinch gesture detected while displaying the virtual object 342 facing the vertex 150-2 of the view finder object 150 having a rectangular shape, the wearable device 101 may detect an input for resizing the view finder object 150. In response to the input, the wearable device 101 may change the size of the view finder object 150, using the position and/or direction of the virtual object 342, which is a pointer object.

Referring to FIG. 8C, the wearable device 101 may display the screen 804 including the view finder object 150 having an increased size, using the direction and/or position of the hand 112 detected using images (e.g., images 311 and 312). While the pinch gesture of the hand 112 is maintained, the wearable device 101 may increase or reduce the size of the view finder object 150 on the display, using the position and/or direction of the hand 112. For example, the wearable device 101 may provide a user experience, such as where the vertex 150-2 of the view finder object 150 facing the virtual object 342 follows the virtual object 342 moved by the hand 112 having the pinch gesture. When the pinch gesture of the hand 112 is terminated, the wearable device 101 may cease adjusting the size of the view finder object 150.

Adjusting the size of the view finder object 150 using the position and/or direction of the hand 112 having the pinch gesture may be performed below the maximum size. For example, in order to maintain visibility of a boundary line of the view finder object 150 in the display, the maximum size may be set. The wearable device 101 may change the size of the view finder object 150 below the maximum size. For example, the maximum size may correspond to a specified ratio (e.g., 90%) of the FoV of the display.

In an embodiment, the wearable device 101 may provide a user experience disconnected from an external space, such as VR. For example, the wearable device 101 may not display a composite image with respect to the external space. The wearable device 101 may execute a software application associated with VR to display at least a portion of a virtual space provided from the software application. For example, the entire displaying area of the display may be occupied by the virtual space.

Referring to FIG. 8D, an example screen 805 displayed by the wearable device 101 receiving an input for executing a camera application is illustrated while providing a virtual space for VR. Within the screen 805, the wearable device 101 may display the view finder object 150 superimposed on a virtual space 840 associated with VR. Since the view finder object 150 is superimposed on the virtual space 840, a portion of the virtual space 840 superimposed with the view finder object 150 may not be displayed. The disclosure is not limited thereto, and the wearable device 101 may display the view finder object 150 using specified transparency, in order to at least partially maintain visibility of the portion of the virtual space 840 superimposed with the view finder object 150.

The wearable device 101 may display an outer image (e.g., the composite image 520 of FIG. 5) obtained using a camera (e.g., the camera 225 of FIG. 2) of the wearable device 101, together with the view finder object 150. Within the screen 805, the image may be bounded by the view finder object 150. The wearable device 101 may be switched from VR providing a user experience disconnected from an external space to pass-through at least partially visualizing the external space, by displaying the view finder object 150 including at least a portion of the outer image.

Referring to FIG. 8D, while displaying the view finder object 150, the wearable device 101 may receive an input for moving of the view finder object 150. For example, in response to the pinch gesture of the hand 112 detected while displaying the virtual object 342 facing a boundary line 150-1 of the view finder object 150, the wearable device 101 may move the view finder object 150 within the display, using the position and/or direction of the hand 112. For example, while displaying the screen 805, the wearable device 101 detecting the pinch gesture of the hand 112 may move the view finder object 150 along a path of the hand 112. For example, within a screen 806 displayed after the screen 805, the view finder object 150 may be moved toward a left edge of the display along the path of the hand 112. As the view finder object 150 is moved, a portion of a composite image included in the view finder object 150 may be changed.

As described above, the wearable device 101 may adjust the position and/or size of the view finder object 150 displayed on the display. The wearable device 101 displaying the view finder object 150 at a first position of the display may store, in memory, a first portion of a composite image corresponding to the first position, in response to receiving an input for shooting. Similarly, while displaying the view finder object 150 at a second position of the display different from the first position, the wearable device 101 may store a second portion of the composite image corresponding to the second position in response to receiving the input for shooting. For example, a portion of an external space corresponding to the image and/or video stored in the memory may be associated with a position and/or size of the view finder object 150 in the display at a time point of obtaining the image and/or video. For example, the wearable device 101 may obtain or store an image and/or video of a portion of an external space bounded by the position and/or size of the view finder object 150 within the display.

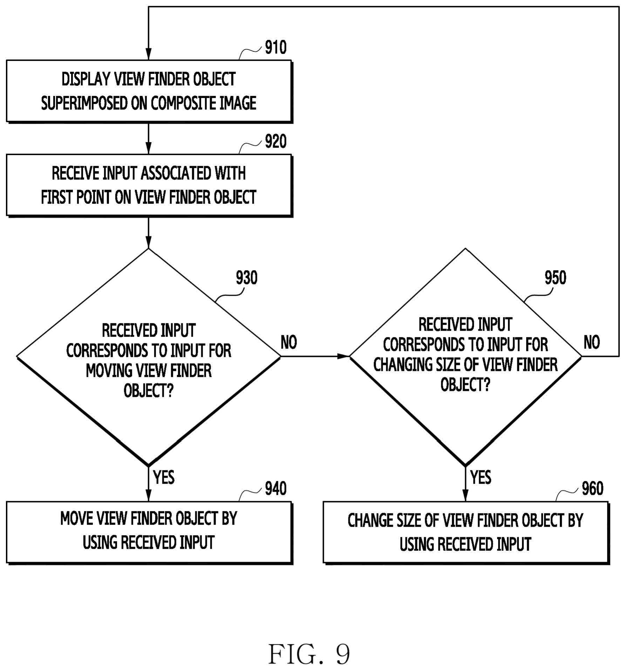

Hereinafter, an example operation of the wearable device 101 described with reference to FIGS. 8A to 8D will be described in greater detail with reference to FIG. 9.

FIG. 9 is a flowchart illustrating an example operation of a wearable device according to various embodiments. The wearable device 101 of FIGS. 1 and 2 and/or the processor 210 of FIG. 2 may perform an operation of a wearable device described with reference to FIG. 9. The operation of the wearable device of FIG. 9 may be associated with the operation of the wearable device 101 described with reference to FIGS. 8A to 8D. Instructions stored in memory (e.g., the memory 215 of FIG. 2) of the wearable device, when executed by a processor of the wearable device, may cause the wearable device to perform an operation of FIG. 9.

Referring to FIG. 9, in operation 910, a processor of a wearable device according to an embodiment may display a view finder object (e.g., the view finder object 150 of FIGS. 1 and/or 8A to 8D) superimposed on a composite image (e.g., the composite image 520 of FIG. 5). The processor may display the view finder object by performing operation 910 of FIG. 9, similarly to operation 410 of FIG. 4 and/or operation 710 of FIG. 7. For example, the processor may perform operation 910 in response to an input for executing a software application for controlling a camera (e.g., the camera 225 of FIG. 2 and/or an outward camera) of the wearable device, such as a camera application.

Referring to FIG. 9, in operation 920, the processor of the wearable device according to an embodiment may receive an input associated with a first point on the view finder object. For example, the wearable device may detect a hand of a user (e.g., the user 110 of FIGS. 1 and/or 8A to 8D) wearing the wearable device from an image of an outward camera. The processor may receive or detect an input associated with the first point of operation 920, using a direction and/or shape of the hand. While displaying a view finder object having a shape of a line, a first point on the view finder object may be positioned on the line (e.g., side and/or vertex). For example, when a hand unfolded along a direction corresponding to the first point has a shape of a pinch gesture, the processor may determine that the input of operation 920 is detected.

Referring to FIG. 9, in operation 930, the processor of the wearable device according to an embodiment may determine whether an input received based on operation 920 corresponds to an input for moving the view finder object. For example, while displaying a view finder object with a rectangular shape, the processor may detect an input for moving the view finder object of operation 930, based on whether the first point of operation 920 corresponds to a side. In response to the input for moving the view finder object (930-YES), the processor may perform operation 940. When the input of operation 920 is different from the input for moving the view finder object (930-NO), the processor may perform operation 950. For example, while displaying a view finder object having a rectangular shape, when the first point of operation 920 does not correspond to a side, the processor may perform operation 950.

Referring to FIG. 9, in operation 940, the processor of the wearable device according to an embodiment may move the view finder object using the received input. The screen 803 of FIG. 8B may be an example screen displayed while moving the view finder object 150 using operation 940. The processor may move the view finder object according to operation 940, until detecting that the input is stopped by a change of a shape (e.g., the shape of the pinch gesture) of the hand.

Referring to FIG. 9, in operation 950, the processor of the wearable device according to an embodiment may determine whether the input received based on operation 920 corresponds to an input for changing a size of the view finder object. For example, while displaying a view finder object with a rectangular shape, the processor may detect an input for changing the size of the view finder object in operation 950, based on whether the first point of operation 920 corresponds to a vertex. When the first point corresponds to the vertex, the processor may determine that the input of operation 920 corresponds to the input for changing the size of the view finder object. When the input for changing the size of the view finder object is received (950-YES), the processor may perform operation 960. When the input of operation 920 is different from all of inputs of operations 930 and 950 (950-NO), the processor may maintain displaying the view finder object based on operation 910.

Referring to FIG. 9, an embodiment of sequentially performing operations 930 and 950 in response to the input associated with the first point on the view finder object has been described, but the disclosure is not limited thereto. For example, the processor may perform the operations 930 and 950 substantially simultaneously or in an order opposite to the order of FIG. 9.

Referring to FIG. 9, in operation 960, the processor of the wearable device according to an embodiment may change the size of the view finder object using a received input. The screen 804 of FIG. 8C may be an example screen displayed by the processor that performs operation 960. While detecting the hand of the pinch gesture, the processor may continuously change the size of the view finder object by performing operation 960. When the shape of the hand is changed to a shape different from the pinch gesture, the processor may cease changing the size of the view finder object of operation 960.

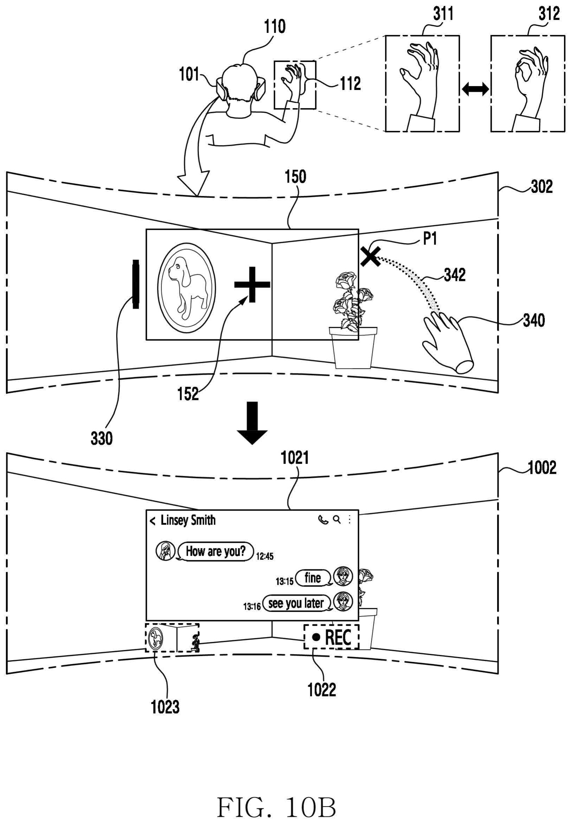

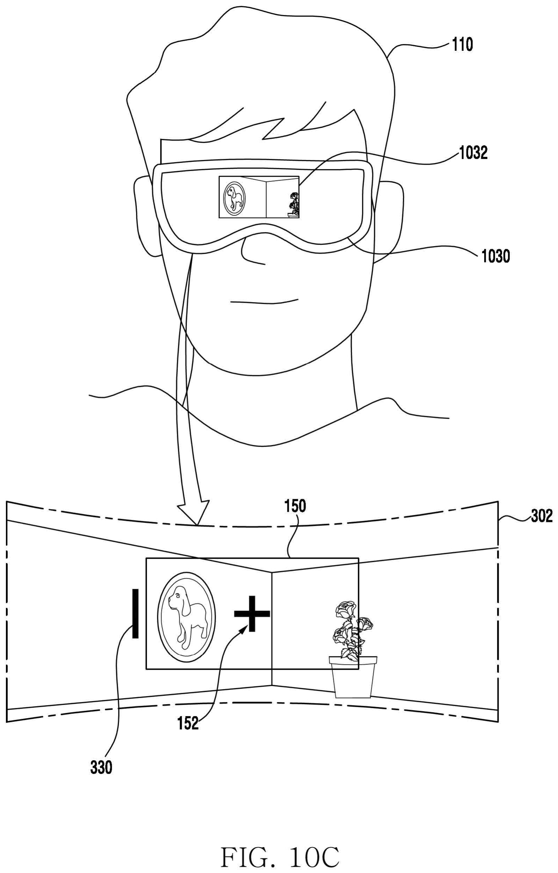

For example, a user may change a size and/or position of a view finder object displayed on a display by performing the input described with reference to FIGS. 8A to 8D, and change a focal length by performing the input described with reference to FIG. 6. A user who changes the size and/or position of the view finder object and changes the focal length may obtain an image and/or video by performing a shooting input. Hereinafter, an example operation of a wearable device receiving a shooting input will be described in greater detail with reference to FIGS. 10A, 10B and 10C (which may be referred to as FIGS. 10A to 10C) and/or 11.

FIGS. 10A, 10B, and 10C are diagrams illustrating an example operation of a wearable device 101 obtaining an image and/or video according to various embodiments. The wearable device 101 and/or the processor 210 of FIGS. 1 to 2 may perform an operation of the wearable device 101 described with reference to FIGS. 10A to 10C.

Referring to FIGS. 10A to 10C, screens 302 and 1002 displayed by the wearable device 101 executing instructions included in a camera application are illustrated. While displaying a view finder object 150 superimposed on a composite image associated with VST, the wearable device 101 may track a hand 112. For example, a virtual object 340 representing a position and/or direction of the hand 112 may be displayed on the screen 302.

Referring to FIG. 10A, within the screen 302 including the view finder object 150, the wearable device 101 may display a virtual object 340 that moves according to the position and/or direction of the hand 112 and a virtual object 342 having a shape of a line extending from the virtual object 340. Referring to the example screen 302 of FIG. 10A, while displaying the virtual object 342 facing a point p1 within a portion different from the portion of the composite image specified by the view finder object 150, the wearable device 101 may detect or receive a shooting input based on a pose of the hand 112. For example, while displaying the virtual object 342 facing the point p1, the wearable device 101 detecting a pinch gesture using continuously obtained images 311 and 312 may determine that the shooting input is received. For example, the shooting input may be received by the pinch gesture performed by the hand 112 having a direction corresponding to the point p1 outside the view finder object 150 within the screen 302.

In an example state of displaying the screen 302 of FIG. 10A, the wearable device 101 may obtain an image 1010, in response to a pinch gesture performed for less than a specified duration (e.g., a few seconds) and performed by the hand 112 facing the point p1 outside the view finder object 150. For example, the pinch gesture performed less than a specified duration by the hand 112 having a direction corresponding to the point p1 outside the view finder object 150 within the screen 302 may be a shooting input for generating a photo at a specific time point. Referring to FIG. 10A, in response to the shooting input, the wearable device 101 may store the image 1010 including a portion of a composite image corresponding to the view finder object 150, in memory (e.g., the memory 215 of FIG. 2).

In an embodiment, the wearable device 101 may record a video based on the view finder object 150. Referring to the screen 302 of FIG. 10B, the wearable device 101 may initiate video recording, in response to a pinch gesture performed by the hand 112 facing the point p1 outside the view finder object 150 and performed more than the specified duration. The wearable device 101 may obtain or store a video corresponding to the view finder object 150 from a point time when the pinch gesture performed for more than the specified duration is detected. For example, the pinch gesture, which is performed by the hand 112 having a direction corresponding to the point p1 outside the view finder object 150 within the screen 302 for more than the specified duration, may be a shooting input to start recording a video.

Referring to FIG. 10B, while recording a video in response to the shooting input for recording a video, the wearable device 101 may receive an input for executing a software application different from the camera application. In response to the input detected while obtaining a video with respect to a portion of the composite image, the wearable device 101 may cease displaying the view finder object 150, such as the screen 1002 of FIG. 10B.

Referring to the screen 1002 of FIG. 10B, the wearable device 101 may display a virtual object 1021 provided from the software application, in response to the input. The wearable device 101 that ceases displaying the view finder object 150 may display an indicator 1022 indicating video recording. The indicator 1022 may be displayed after a specified time (e.g., a few seconds) from a time point when the display of the view finder object 150 is ceased. The indicator 1022 may include a conventional icon (e.g., red circle) and/or text (e.g., "REC") indicating video recording. A size and/or shape of the indicator 1022 is not limited to the embodiment of FIG. 10B. The wearable device 101 that ceases displaying the view finder object 150 may display a virtual object 1023 for providing a thumbnail (or preview) of a video being obtained using a camera. The virtual object 1023 may have a size smaller than the view finder object 150.

In response to an input (e.g., a pinch gesture of the hand 112 having a direction corresponding to the indicator 1022 and/or the virtual object 1023) of selecting the indicator 1022 and/or the virtual object 1023, the wearable device 101 may display the view finder object 150 again. For example, the wearable device 101 may display the view finder object 150 again at a position of the view finder object 150, which was displayed before receiving an input for executing a software application corresponding to the virtual object 1021.

After receiving the input for selecting the indicator 1022 and/or the virtual object 1023, the wearable device 101 may check whether to cease displaying the virtual object 1021 before displaying the view finder object 150 again. For example, the wearable device 101 may display a virtual object checking whether to minimize or reduce a size of the virtual object 1021. In response to an input indicating selection of the virtual object, the wearable device 101 may cease displaying the virtual object 1021 and display the view finder object 150 again.

The wearable device 101 that obtains a video corresponding to the view finder object 150 in response to an input for video recording may further receive an input of ceasing the video recording. The input may also be detected by a pinch gesture of the hand 112 having a direction corresponding to a point outside the view finder object 150, similar to the input for video recording. The disclosure is not limited thereto, and while recording a video, a visual object (e.g., a shutter) for receiving an input for ceasing the video recording may be further displayed. The wearable device 101 may cease recording the video, in response to an input (e.g., an input indicating selection of the visual object using a pinch gesture) associated with the visual object.

Referring to FIG. 10C, an embodiment of the wearable device 101 further including a display 1030 facing an outer space while being worn by the user 110 is illustrated. Using the display 1030, the wearable device 101 may notify a state of the user 110 wearing the wearable device 101 to another user different from the user 110 and/or an external environment. Referring to FIG. 10C, while displaying the view finder object 150 provided by the camera application, the wearable device 101 may display a visual object 1032 associated with the view finder object 150 on the display 1030. The visual object 1032 may include a portion of a composite image corresponding to the view finder object 150. A position of the visual object 1032 within the display 1030 may correspond to a position of the view finder object 150 within the screen 302, which is visible to the user 110 wearing the wearable device 101.

For example, the user 110 wearing the wearable device 101 may look the screen 302 using a display (e.g., the display 220 of FIG. 2) facing the user's 110 two eyes. The wearable device 101 may display a screen including the visual object 1032 on the display 1030 disposed on another surface opposite to a surface of a housing on which the display is disposed. The visual object 1032 may be displayed by the wearable device 101 receiving a shooting input (e.g., a shooting input for an image and/or video). The disclosure is not limited thereto, and the wearable device 101 may display the visual object 1032 on the display 1030 while displaying the view finder object 150 within the screen 302.

An example of displaying the visual object 1032 including a portion of a composite image corresponding to the view finder object 150 is described, but the disclosure is not limited thereto. For example, in response to a shooting input, the wearable device 101 may display an image, text, and/or icon indicating the shooting input on the display 1030. For example, while recording a video, the wearable device 101 may display the indicator 1022 of FIG. 10B on the display 1030.

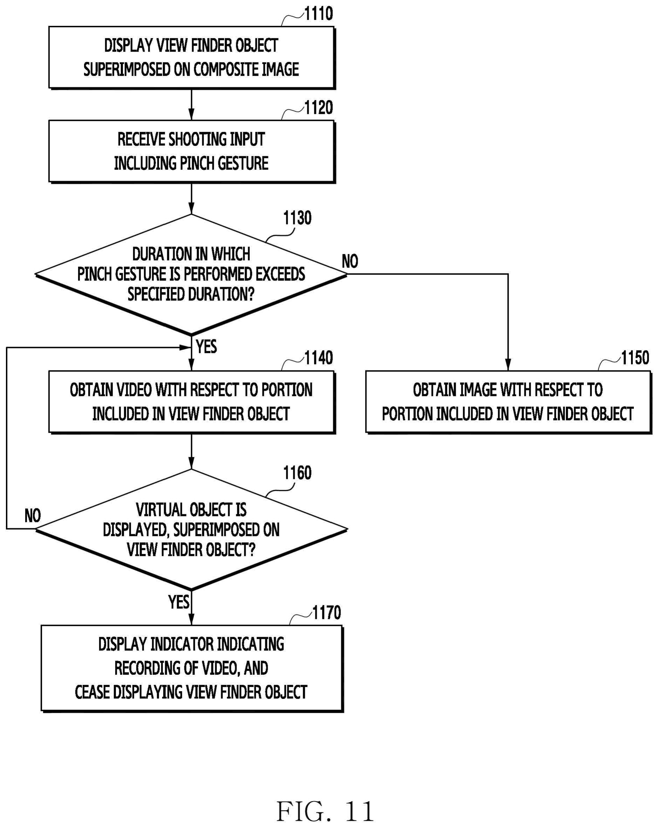

Hereinafter, an example operation of the wearable device 101 described with reference to FIGS. 10A to 10C will be described in greater detail with reference to FIG. 11.

FIG. 11 is a flowchart illustrating example operations of a wearable device according to various embodiments. The wearable device 101 of FIGS. 1 and 2 and/or the processor 210 of FIG. 2 may perform an operation of a wearable device described with reference to FIG. 11. The operation of the wearable device of FIG. 11 may be associated with the operation of the wearable device 101 described with reference to FIGS. 10A to 10C. Instructions stored in memory (e.g., the memory 215 of FIG. 2) of the wearable device, when executed by a processor of the wearable device, may cause the wearable device to perform the operation of FIG. 11.

Referring to FIG. 11, in operation 1110, the processor of the wearable device according to an embodiment may display a view finder object (e.g., the view finder object 150 of FIGS. 1 and/or 8A to 8D) superimposed on a composite image (e.g., the composite image 520 of FIG. 5). The processor may display the view finder object by performing operation 1110 of FIG. 11, similarly to operation 410 of FIG. 4, operation 710 of FIG. 7, and/or operation 910 of FIG. 9.

Referring to FIG. 11, in operation 1120, the processor of the wearable device according to an embodiment may receive a shooting input including a pinch gesture. As described above with reference to FIGS. 10A and/or 10B, the processor may receive a shooting input of operation 1120, in response to a pinch gesture of a hand having a direction corresponding to a point of the display outside the view finder object. Using the image and/or video corresponding to the hand, the processor may calculate or identify a duration in which the pinch gesture is maintained.

Referring to FIG. 11, in operation 1130, the processor of the wearable device according to an embodiment may determine whether a duration in which the pinch gesture is performed exceeds a specified duration. The specified duration may be set to determine whether to obtain either an image or a video in response to a shooting input represented by a pinch gesture. When a pinch gesture exceeding the specified duration is detected (1130-YES), the processor may perform operation 1140. When a pinch gesture less than or equal to the specified duration is detected (1130-NO), the processor may perform operation 1150.

Referring to FIG. 11, in operation 1150, the processor of the wearable device according to an embodiment may obtain an image (e.g., the image 1010 of FIG. 10A) with respect to a portion included in the view finder object. The processor may store the image of operation 1150 in the memory. After obtaining the image using operation 1150, the processor may maintain displaying the view finder object. For example, in order to further receive the shooting input, the processor may continuously display the view finder object.

Referring to FIG. 11, in operation 1140, the processor of the wearable device according to an embodiment may obtain a video with respect to a portion included in the view finder object. While obtaining a video with respect to a portion corresponding to the view finder object, the processor may further display a visual object to guide obtaining the video. While obtaining the video, the processor may maintain displaying the view finder object. In response to an input for adjusting a position and/or size of the view finder object described with reference to FIGS. 8A to 8D, the processor may change the position and/or size of the view finder object, while obtaining the video. The video obtained by the wearable device may include a portion corresponding to the view finder object having the changed position and/or the changed size.

Referring to FIG. 11, in operation 1160, the processor of the wearable device according to an embodiment may check whether a virtual object is displayed, superimposed on the view finder object. For example, when a user executes a software application, a virtual object provided by the software application may be displayed in the display. When the virtual object of operation 1160 is not superimposed on the view finder object or is separated from the view finder object (1160-NO), the processor may maintain obtaining video and continuously display the view finder object, by performing operation 1140. In a state of identifying the virtual object superimposed on the view finder object (1160-YES), the processor may perform operation 1170.

Referring to FIG. 11, in operation 1170, the processor of the wearable device according to an embodiment may display an indicator (e.g., indicator 1022 of FIG. 10B) indicating recording of a video and cease displaying the view finder object. The disclosure is not limited thereto, and the processor may display a virtual object (e.g., the virtual object 1023 of FIG. 10B) for providing a preview of the video. The processor receiving an input associated with the indicator of operation 1170 may display the view finder object again.

Hereinafter, an operation of the wearable device associated with a control handle (e.g., the control handle 330 of FIGS. 3A to 3C) displayed together with the view finder object will be described in greater detail with reference to FIGS. 12 to 20.

FIG. 12 is a diagram illustrating an example operation of a wearable device 101 with respect to a control handle 330 displayed together with a view finder object according to various embodiments. The wearable device 101 and/or the processor 210 of FIGS. 1 and 2 may perform an operation of the wearable device 101 described with reference to FIG. 12.

Referring to FIG. 12, an example screen 302 of the wearable device 101 including a view finder object 150 and a control handle 330 provided from a camera application is illustrated. Although an embodiment in which the control handle 330 is displayed along a left edge of the view finder object 150 is illustrated, a position, shape, and/or size of the control handle 330 are not limited thereto.

While displaying the screen 302, the wearable device 101 detecting a body part including a hand 112 from an image and/or video obtained from an outward camera may display a virtual object 340 corresponding to the hand 112 within the screen 302. The wearable device 101 may display a virtual object 342 representing a direction of the hand 112, together with the virtual object 340. In response to a pinch gesture of the hand 112 detected while a direction of the hand 112 represented by the virtual object 342 faces a point p1 on the control handle 330, the wearable device 101 may detect or receive an input indicating selection of the control handle 330.

In response to the input indicating selection of the control handle 330, the wearable device 101 may display visual objects 1221, 1222, 1223, 1224, 1225, 1226, 1227, 1228, 1229, 1230, and 1231 corresponding to each of functions associated with shooting, along a direction of an edge of the view finder object 150 having a rectangular shape. Referring to FIG. 12, the wearable device 101 may display a control menu 1210 including the visual objects 1221, 1222, 1223, 1224, 1225, 1226, 1227, 1228, 1229, 1230, and 1231. The control menu 1210 may be referred to as a context menu and/or a pop-up menu. Within the screen 302, the control menu 1210 may be at least partially superimposed on the control handle 330.

Referring to FIG. 12, a control menu 1210 including different icons is illustrated. The visual object 1221 may correspond to a function for displaying a virtual object and/or window including different options associated with shooting. The visual object 1222 may correspond to a function for activating a flash light included in the wearable device 101. The visual object 1223 may correspond to a function for adjusting a delay between a time point when the shooting input is received and a time point when an image and/or video is obtained (e.g., timer). The visual object 1224 may correspond to a function for adjusting an aspect ratio of the view finder object 150 and/or an aspect ratio of an image and/or video to be obtained in response to a shooting input. The visual object 1225 may correspond to a function for obtaining an image in which motion for a specified duration (e.g., a few seconds) is recorded, such as a motion photo. The visual object 1226 may correspond to a function for adjusting a color, brightness and/or chroma of an image and/or video to be obtained by a shooting input, or for applying a visual effect.

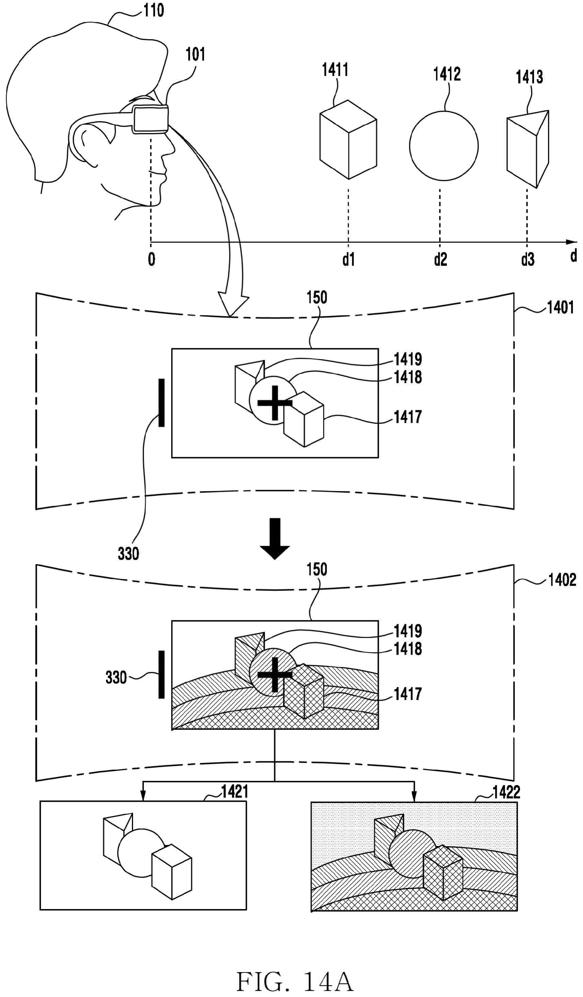

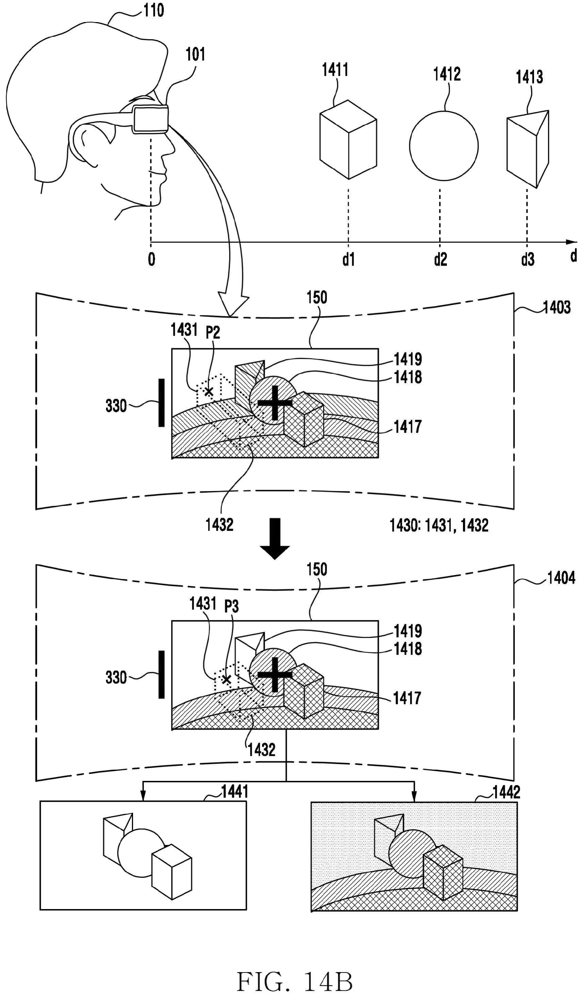

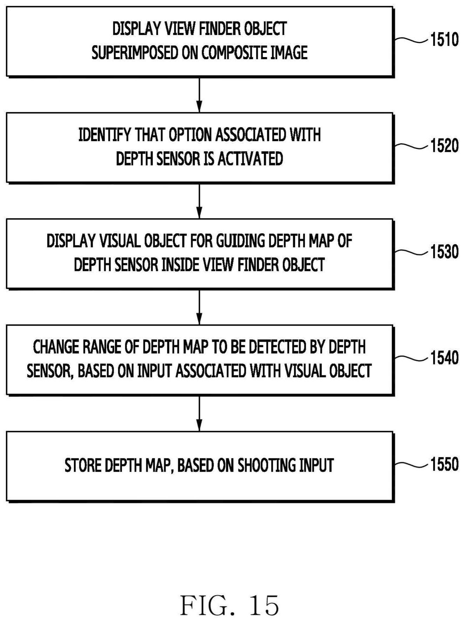

The visual object 1227 may correspond to a function for obtaining a depth map using a depth sensor, together with an image and/or video using a composite image. An example operation of the wearable device 101 executing the function in response to an input indicating selection of the visual object 1227 will be described in greater detail with reference to FIGS. 14A, 14B, and 15.

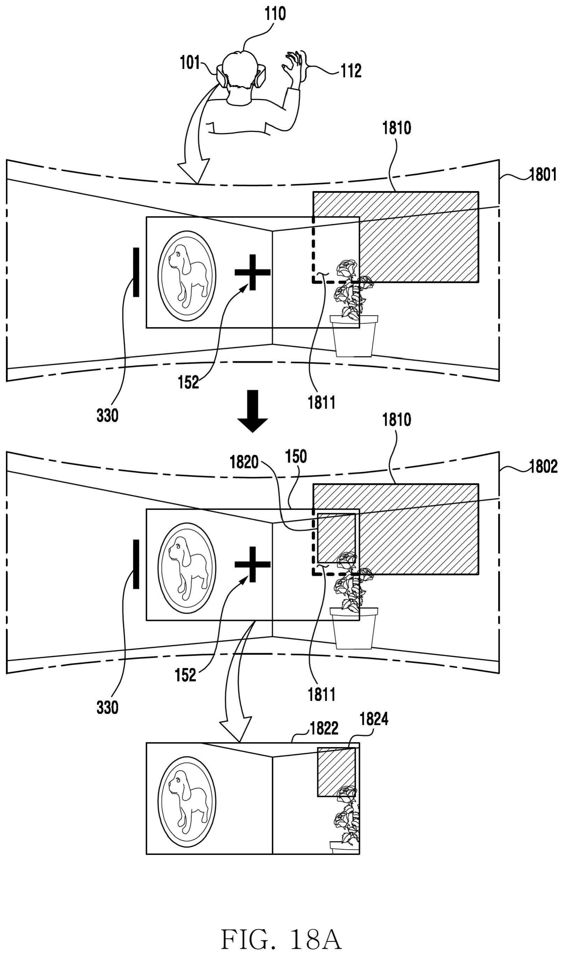

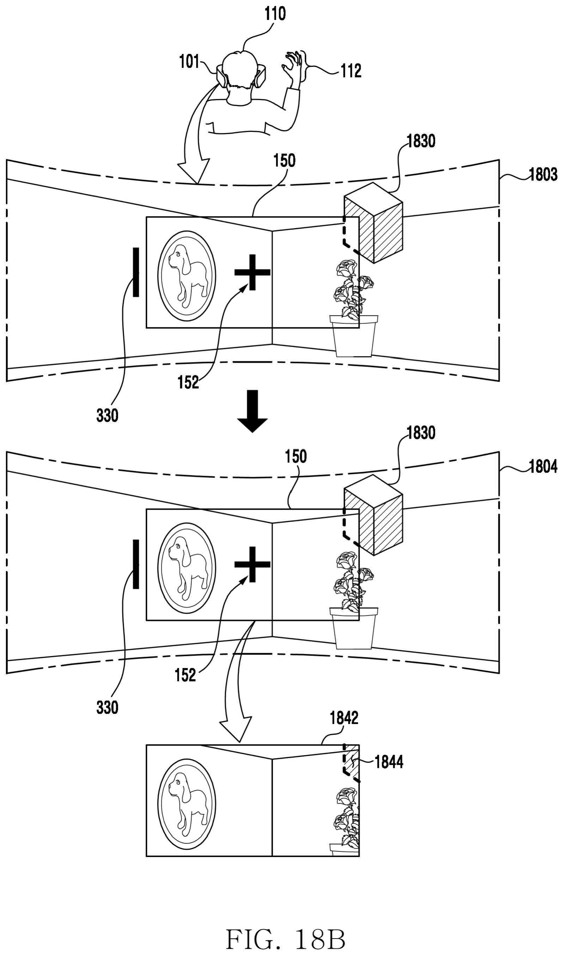

The visual object 1228 may correspond to a function for combining or synthesizing a virtual object displayed on a display, within an image and/or video using a composite image. An example operation of the wearable device 101 receiving an input indicating selection of the visual object 1228 will be described in greater detail with reference to FIGS. 18A and 18B.

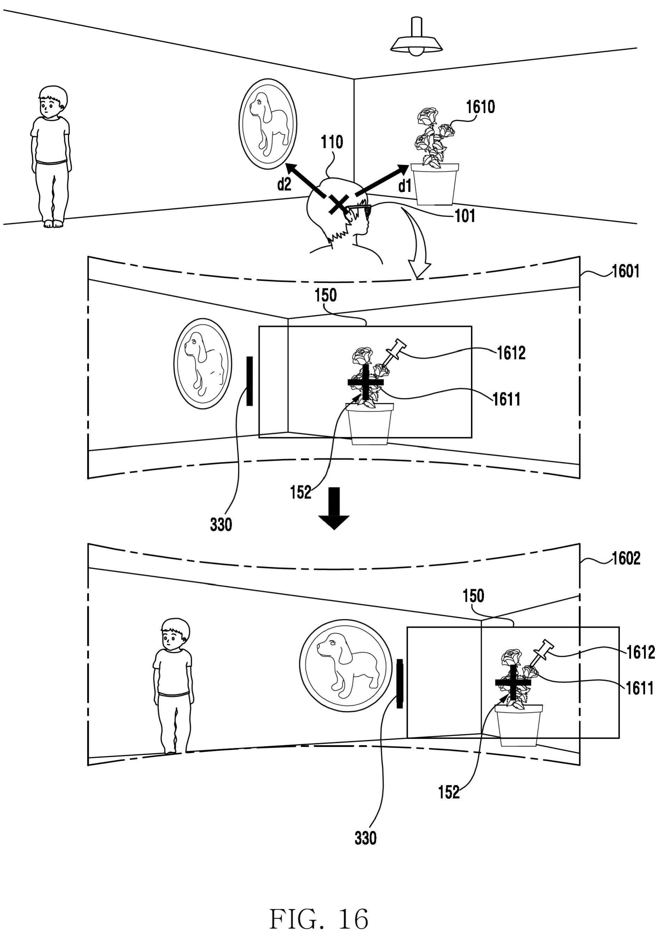

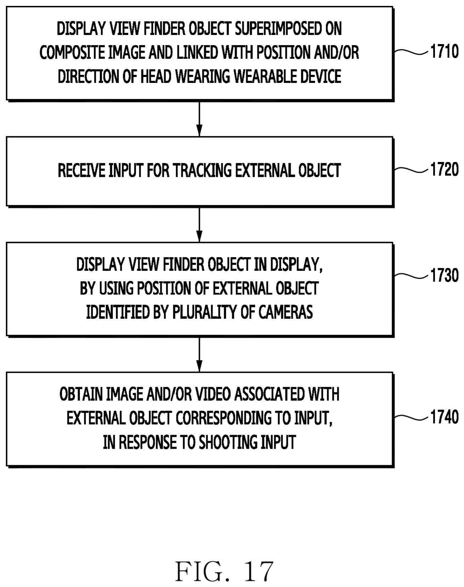

The visual object 1229 may correspond to a function for obtaining an image and/or video associated with a specific external object. An example operation of the wearable device 101 executing the function in response to selection of the visual object 1229 will be described in greater detail with reference to FIGS. 16 and 17.

The visual object 1230 may be referred to as a shutter. In response to an input (e.g., a pinch gesture of the hand 112 having a direction corresponding to the visual object 1230) associated with the visual object 1230, the wearable device 101 may obtain an image and/or video. For example, the shooting input may include an input indicating selection of the visual object 1230.

The visual object 1231 may correspond to a function for browsing an image and/or video stored in the memory (e.g., the memory 215 of FIG. 2) of the wearable device 101. In response to an input indicating selection of the visual object 1231, the wearable device 101 may display a panel and/or a virtual object including a list of images and/or videos stored in the wearable device 101, by executing a specified software application, such as a gallery application.

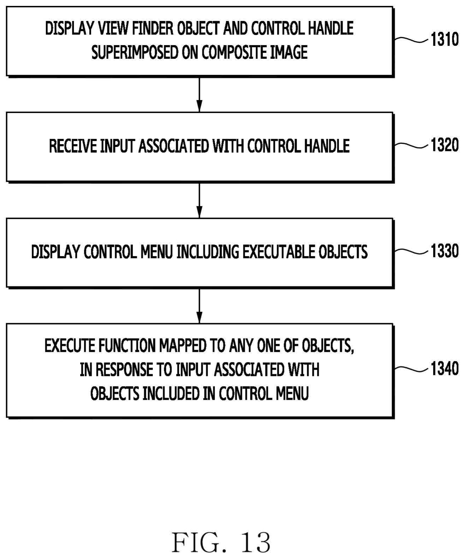

Hereinafter, an example operation of the wearable device 101 associated with the control handle 330 will be described in greater detail with reference to FIG. 13.

FIG. 13 is a flowchart illustrating an example operation of a wearable device according to various embodiments. The wearable device 101 of FIGS. 1 and 2 and/or the processor 210 of FIG. 2 may perform an operation of the wearable device described with reference to FIG. 13. The operation of the wearable device of FIG. 13 may be associated with the operation of the wearable device 101 described with reference to FIG. 12. Instructions stored in memory (e.g., the memory 215 of FIG. 2) of the wearable device, when executed by a processor of the wearable device, may cause the wearable device to perform the operation of FIG. 13.

Referring to FIG. 13, in operation 1310, the processor of the wearable device according to an embodiment may display a view finder object (e.g., the view finder object 150 of FIGS. 1 and/or 8A to 8D) and a control handle (e.g., the control handle 330 of FIGS. 1 and 12) superimposed on a composite image (e.g., the composite image 520 of FIG. 5). Operation 1310 may be performed similarly to operation 410 of FIG. 4, operation 710 of FIG. 7, operation 910 of FIG. 9, and/or operation 1110 of FIG. 11.

Referring to FIG. 13, in operation 1320, the processor of the wearable device according to an embodiment may receive an input associated with a control handle. For example, as described above with reference to FIG. 12, the processor may receive an input including a pinch gesture of a hand having a direction associated with the control handle. The processor receiving the input of operation 1320 may perform operation 1330.

Referring to FIG. 13, in operation 1330, the processor of the wearable device according to an embodiment may display a control menu including executable objects. The control menu of operation 1330 may include the control menu 1210 of FIG. 12. The control menu may be displayed at a position of a display linked with the view finder object and/or the control handle of operation 1310. The control menu may be displayed by being superimposed on the control handle. The processor may replace the control handle with the control menu.

Referring to FIG. 13, in operation 1340, in response to an input associated with objects included in the control menu, the processor of the wearable device according to an embodiment may execute a function mapped to any one of the objects. The objects of operation 1340 may include the visual objects 1221, 1222, 1223, 1224, 1225, 1226, 1227, 1228, 1229, 1230, and 1231 of FIG. 12. In response to an input indicating selection of at least one of the objects of operation 1340, the processor may execute a function associated with an object corresponding to the input.

FIGS. 14A and 14B are diagrams illustrating an example operation of a wearable device 101 associated with a depth sensor according to various embodiments. The wearable device 101 of FIGS. 1 to 2 and/or the processor 210 of FIG. 2 may perform an operation of the wearable device described with reference to FIGS. 14A to 14B.

Referring to FIGS. 14A to 14B, screens 1401 and 1402 displayed by the wearable device 101 executing a camera application are illustrated. While displaying a view finder object 150 superimposed on a composite image, the wearable device 101 may display a control handle 330. The wearable device 101 receiving an input associated with the control handle 330 may display the control menu 1210 of FIG. 12.

Referring to FIG. 14A, the screen 1401 displayed by the wearable device 101 facing external objects 1411, 1412, and 1413 is illustrated. Within the screen 1401, the wearable device 101 may display a composite image including visual objects 1417, 1418, and 1419 corresponding to each of the external objects 1411, 1412, and 1413, using a camera (e.g., the camera 225 of FIG. 2 and/or an outward camera). Referring to FIG. 14A, the external object 1411 may be spaced apart from the wearable device 101 by a distance d1, the external object 1412 may be spaced apart from the wearable device 101 by a distance d2 exceeding the distance d1, and the external object 1413 may be spaced apart from the wearable device 101 by a distance d3 exceeding the distance d2.

Referring to FIG. 14A, the screen 1402 displayed by the wearable device 101 receiving an input (e.g., an input indicating selection of the visual object 1227 of FIG. 12) for obtaining a depth map using the control handle 330 is illustrated. Within the screen 1402, the wearable device 101 may display a virtual object representing a depth map obtained from a depth sensor, superimposed on a portion of a composite image specified by the view finder object 150. For example, the virtual object may include a figure having different colors, brightness and/or transparency. The wearable device 101 may visualize a depth map corresponding to a portion of a composite image specified by the view finder object 150.

Within the screen 1402 of FIG. 14A, the wearable device 101 may visualize a depth map by adjusting a color of a portion of a composite image corresponding to the view finder object 150. For example, the wearable device 101 may visualize a depth map using a specified color such as blue. Within a portion of a composite image specified by the view finder object 150, an area relatively close to the wearable device 101 may be filled with a relatively bright color, and an area relatively far from the wearable device 101 may be filled with a relatively dark color. An area corresponding to a maximum value and/or a minimum value of the depth map may be displayed without color adjustment.

For example, the visual object 1417 corresponding to the external object 1411 positioned closest to the wearable device 101 among the external objects 1411, 1412, and 1413 may be displayed in bright blue. For example, the visual object 1418 corresponding to the external object 1412 positioned farther from the wearable device 101 than the external object 1411 may be displayed in blue. For example, the visual object 1419 corresponding to the external object 1413 positioned farther from the wearable device 101 than the external object 1412 may be displayed in dark blue.

Referring to FIG. 14A, in response to a shooting input received while displaying the screen 1402 visualizing a depth map, the wearable device 101 may store an image 1421 including a portion of the composite image corresponding to the view finder object 150 and a depth map 1422 indicating depth values (e.g., a distance spaced apart from the wearable device 101) of each pixel included in the image 1421. The depth map 1422 may be stored in metadata of the image 1421. The disclosure is not limited thereto, and the depth map 1422 may be stored in a file linked with the image 1421. Together with a portion of the composite image specified by the view finder object 150, the wearable device 101 receiving a shooting input may store the depth map 1422 obtained using the depth sensor and corresponding to the portion.

In an embodiment, the depth map 1422 stored with the image 1421 may be used to display the image 1421 in three dimensions. For example, in response to an input for displaying the image 1421, the wearable device 101 may set binocular disparity of each of pixels of the image 1421, using a depth value individually allocated to the pixel by the depth map 1422. The wearable device 101 may three-dimensionally display the image 1421 including visual objects 1417, 1418, and 1419 corresponding to each of the external objects 1411, 1412, and 1413, using the example depth map 1422 of FIG. 14A. For example, since the distance d1 between the external object 1411 and the wearable device 101 is smaller than the distance d3 between the external object 1413 and the wearable device 101, the wearable device 101 displaying the image 1421 may set binocular disparity of the visual object 1417 corresponding to the external object 1411 to be greater than binocular disparity of the visual object 1419 corresponding to the external object 1413.

In an embodiment, the wearable device 101 may receive an input for adjusting a maximum distance and/or a minimum distance to be measured using a depth sensor. Referring to the example screen 1403 of FIG. 14B, the wearable device 101 may display a virtual object 1430 indicating a measurable range by a depth sensor inside the view finder object 150. In order to maintain visibility of a portion of a depth map and/or composite image visualized through the inside of the view finder object 150, the wearable device 101 may display the virtual object 1430 having specified transparency (e.g., transparency greater than 0%).

Referring to the example screen 1403 of FIG. 14B, the wearable device 101 may display the virtual object 1430 including a plane 1431 representing a maximum value (e.g., a maximum distance) of a depth map to be obtained by a shooting input and a plane 1432 representing a minimum value (e.g., a minimum distance) of the depth map. In response to an input for moving any one of the planes 1431 and 1432, the wearable device 101 may move at least one of the planes 1431 and 1432 displayed on the display. In response to the input, the wearable device 101 may change the maximum value and/or the minimum value of the depth map.

Referring to FIG. 14B, the wearable device 101 detecting a pinch gesture associated with a point p1 on the plane 1431 (e.g., a pinch gesture of a hand facing a direction associated with the point p1) may move the plane 1431 along a path of a hand that performs the pinch gesture while detecting the pinch gesture. Similarly, the wearable device 101 detecting a pinch gesture for movement of the plane 1432 may move the plane 1432 along a position and/or path of the hand that performs the pinch gesture while the pinch gesture is maintained. The disclosure is not limited thereto, and the wearable device 101 receiving the pinch gesture associated with the plane 1432 may move the plane 1432 along the path of the hand that performs the pinch gesture while detecting the pinch gesture.

Referring to FIG. 14B, a screen 1404 displayed by the wearable device 101 receiving an example input for moving the plane 1431 from a point p2 to a point p3 is illustrated. By the input for moving the plane 1431 corresponding to a maximum distance, the maximum distance may be reduced. For example, the maximum distance may be reduced to a distance greater than the distance d2 between the external object 1412 and the wearable device 101 and less than the distance d3 between the external object 1413 and the wearable device 101. Since the reduced maximum distance is less than the distance d3, the wearable device 101 may determine a distance between the external object 1413 and the wearable device 101 as the reduced maximum distance instead of the distance d3. Within the view finder object 150 of the example screen 1404 of FIG. 14B, the wearable device 101 may display the visual object 1419 corresponding to the external object 1413 without changing the color associated with the depth map.

Referring to FIG. 14B, an image 1441 and a depth map 1442 stored by the wearable device 101 receiving a shooting input while displaying the screen 1404 are illustrated. The image 1441 may include a portion of a composite image corresponding to the view finder object 150, such as the image 1421 of FIG. 14A. Within the depth map 1442, unlike the depth map 1422 of FIG. 14A, a depth value corresponding to the external object 1413 farthest away from the wearable device 101 among the external objects 1411, 1412, and 1413 may be set as a maximum distance corresponding to the plane 1431.

As described above, according to an embodiment, the wearable device 101 may obtain or store information (e.g., the depth map 1422 of FIG. 14A and/or the depth map 1442 of FIG. 14B) for three-dimensionally displaying an image (e.g., the image 1421 of FIG. 14A and/or the image 1441 of FIG. 14B) to be obtained by a shooting input. The wearable device 101 may select or determine at least one external object to be displayed three-dimensionally, using a depth range adjustable by a user.

Hereinafter, an example operation of the wearable device 101 described with reference to FIG. 14 will be described in greater detail with reference to FIG. 15.

FIG. 15 is a flowchart illustrating an example operation of a wearable device according to various embodiments. The wearable device 101 of FIGS. 1 and 2 and/or the processor 210 of FIG. 2 may perform an operation of the wearable device described with reference to FIG. 15. The operation of the wearable device of FIG. 15 may be associated with the operation of the wearable device 101 described with reference to FIG. 14. Instructions stored in memory (e.g., the memory 215 of FIG. 2) of the wearable device, when executed by a processor of the wearable device, may cause the wearable device to perform the operation of FIG. 15.

Referring to FIG. 15, in operation 1510, the processor of the wearable device according to an embodiment may display a view finder object (e.g., the view finder object 150 of FIGS. 1 and/or 8A to 8D) superimposed on a composite image (e.g., the composite image 520 of FIG. 5). Operation 1510 of FIG. 15 may be performed similarly to operation 410 of FIG. 4, operation 710 of FIG. 7, operation 910 of FIG. 9, operation 1110 of FIG. 11, and/or operation 1310 of FIG. 13.

Referring to FIG. 15, in operation 1520, the processor of the wearable device according to an embodiment may identify that an option associated with a depth sensor is activated. For example, in response to an input of selecting a visual object (e.g., the visual object 1227 of FIG. 12), which is included in a control menu (e.g., the control menu 1210 of FIG. 12) provided by a control handle (e.g., the control handle 330 of FIGS. 1 and 14) displayed with the view finder object and corresponds to an option of operation 1520, the option may be activated or deactivated. For example, in response to the input, activation of the option may be toggled. When the option of operation 1520 is activated, the processor may perform operation 1530.

Referring to FIG. 15, in operation 1530, the processor of the wearable device according to an embodiment may display a visual object for guiding a depth map of a depth sensor inside the view finder object. As described above with reference to FIGS. 14A and/or 14B, the visual object of operation 1530 may include one or more virtual objects superimposed inside the view finder object to visualize the depth map. As described above with reference to FIGS. 14A and/or 14B, the visual object of operation 1530 may include one or more figures having colors indicating a depth distribution (or distance distribution) represented by the depth map. The visual object of operation 1530 may include the virtual object 1430 displayed inside the view finder object.

Referring to FIG. 15, in operation 1540, the processor of the wearable device according to an embodiment may change a range of a depth map to be detected by the depth sensor, based on an input associated with the visual object. The visual object of operation 1540 may be displayed inside the view finder object in order to change the range of the depth map, such as the virtual object 1430 including the planes 1431 and 1432 of FIG. 14. The screen 1404 of FIG. 14B may be displayed by the wearable device 101 that changes the range of the depth map based on the input of operation 1540.

Referring to FIG. 15, in operation 1550, the processor of the wearable device according to an embodiment may store a depth map (e.g., the depth map 1422 of FIG. 14A and/or the depth map 1442 of FIG. 14B) based on a shooting input. The depth map of operation 1550 may be associated with an image and/or video to be obtained based on the shooting input. For example, the depth map of operation 1550 may be stored in association with an image and/or video obtained by the shooting input.

Hereinafter, an example operation of a wearable device obtaining an image and/or video to track an external object will be described in greater detail with reference to FIGS. 16 and/or 17.

FIG. 16 is a diagram illustrating an example operation of a wearable device 101 tracking an external object according to various embodiments. The wearable device 101 of FIGS. 1 and 2 and/or the processor 210 of FIG. 2 may perform an operation of the wearable device described with reference to FIG. 16.

Referring to FIG. 16, an example screen 1601 displayed by the wearable device 101 while a user 110 looks in a direction d1 is illustrated. The wearable device 101 executing a camera application may display, on the screen 1601, a composite image and a view finder object 150 superimposed on the composite image. The wearable device 101 displaying the view finder object 150 and a control handle 330 may display the control menu 1210 of FIG. 12, in response to an input associated with the control handle 330.

Referring to FIG. 16, the screen 1601 displayed by the wearable device 101 receiving an input (e.g., an input indicating selection of the visual object 1229 of FIG. 12) for obtaining an image and/or video associated with a specific external object using the control handle 330 is illustrated. The wearable device 101 receiving the input may detect or receive an input indicating tracking of an external object, within a portion of a composite image specified by the view finder object 150. The disclosure is not limited thereto, and the wearable device 101 may detect or receive an input for selecting any one of external objects associated with the composite image.

Referring to FIG. 16, the wearable device 101 receiving an input (e.g., an input detected by a pinch gesture of a hand having a direction corresponding to a visual object 1611) for selecting the visual object 1611 corresponding to a specific external object (e.g., pot 1610) may determine to track the external object. In response to the input, the wearable device 101 may display a virtual object 1612 having a position linked with the visual object 1611 included in the composite image. Although the pin-shaped virtual object 1612 is illustrated, the disclosure is not limited thereto. The wearable device 101 may adjust a position of the view finder object 150 associated with the composite image so that the visual object 1611 is included in the view finder object 150. Referring to the example screen 1601 of FIG. 16, the wearable device 101 may display the view finder object 150 superimposed on a portion of a composite image including the visual object 1611.

Before receiving an input for obtaining an image and/or video including a specific external object, the wearable device 101 may display the view finder object 150 anchored at a specific point of the display. Referring to FIG. 16, in an example state of receiving an input for obtaining an image and/or video associated with the pot 1610, the wearable device 101 may change a position of the view finder object 150 according to a position of the visual object 1611 corresponding to the pot 1610 within the composite image.

For example, when the user 110 who was looking in the direction d1 looks in a direction d2, the wearable device 101 may display a screen 1602 including a composite image corresponding to the direction d2. Within the screen 1602, the wearable device 101 may display the view finder object 150, so that the visual object 1611 corresponding to the pot 1610 is disposed inside the view finder object 150. The wearable device 101 may display the virtual object 1612 adjacent to the visual object 1611, together with the view finder object 150.

The virtual object 1612 may be displayed while the wearable device 101 moves a position of the view finder object 150 using a position within the composite image of the visual object 1611. In response to an additional input (e.g., a pinch gesture of a hand having a direction associated with the virtual object 1612) associated with the virtual object 1612, the wearable device 101 may cease displaying the virtual object 1612 or change an external object linked with the virtual object 1612 into another external object. For example, an input representing selection of the virtual object 1612 may be mapped to a function that ceases moving the view finder object 150 using a position of the visual object 1611 corresponding to the virtual object 1612 within the composite image. The wearable device 101 receiving the input may cease displaying the virtual object 1612.

As described above, in response to an input for tracking an external object (e.g., the pot 1610), the wearable device 101 may change a position of the view finder object 150 on a composite image, using a position of the external object associated with the composite image. When receiving a shooting input, the wearable device 101 may obtain or store an image and/or video associated with a portion of a composite image corresponding to the view finder object 150 including a visual object (e.g., the visual object 1611) corresponding to an external object. While recording a video in response to the shooting input, the wearable device 101 may obtain or store an image and/or video including the visual object 1611 corresponding to an external object in a composite image, independently of rotation and/or movement of a head of the user 110 wearing the wearable device 101.

As described above with reference to FIG. 16, independently of whether the user 110 wearing the wearable device 101 is looking in the same direction as an external object corresponding to the input, the wearable device 101 may track a visual object corresponding to the external object within the composite image, by adjusting the position of the view finder object 150.

Hereinafter, an example operation of the wearable device 101 described with reference to FIG. 16 will be described in greater detail with reference to FIG. 17.

FIG. 17 is a flowchart illustrating an example operation of a wearable device according to various embodiments. The wearable device 101 of FIGS. 1 and 2 and/or the processor 210 of FIG. 2 may perform an operation of the wearable device described with reference to FIG. 17. The operation of the wearable device of FIG. 17 may be associated with the operation of the wearable device 101 described with reference to FIG. 16. Instructions stored in memory (e.g., the memory 215 of FIG. 2) of the wearable device, when executed by a processor of the wearable device, may cause the wearable device to perform the operation of FIG. 17.

Referring to FIG. 17, in operation 1710, the processor of the wearable device according to an embodiment may display a view finder object (e.g., the view finder object 150 of FIGS. 1 and/or 8A to 8D) superimposed on a composite image (e.g., the composite image 520 of FIG. 5) and linked with a position and/or direction of a head wearing the wearable device. As described above with reference to FIG. 8A, a position of the view finder object may be anchored to a specific point of a display (e.g., the display 220 of FIG. 2). By displaying a view finder object having a position anchored to a point in the display, the processor may provide a user experience such as where the view finder object follows the user's head and/or FoV.

Referring to FIG. 17, in operation 1720, the processor of the wearable device according to an embodiment may receive an input for tracking an external object. The input of operation 1720 may be received through a control handle (e.g., the control handle 330 of FIGS. 1 and/or 16) and/or a control menu (e.g., the control menu 1210 of FIG. 12) displayed together with the view finder object. For example, the input of operation 1720 may include an input indicating selection of the visual object 1229 in the control menu 1210 of FIG. 12. In at least a portion of a composite image displayed through the display, the input of operation 1720 may include an input indicating selection of a visual object (e.g., the visual object 1611 of FIG. 16) corresponding to a specific external object.

Referring to FIG. 17, in operation 1730, the processor of the wearable device according to an embodiment may display the view finder object in the display, using a position of an external object identified by a plurality of cameras (e.g., the camera 225 of FIG. 12 and/or an outward camera). While performing operation 1730, the processor may display the view finder object using a position of the visual object corresponding to the external object within the display. While performing operation 1730, the processor may display a view finder object so that the view finder object includes a visual object within the display. For example, the position of the view finder object within the display may be associated with the position of the external object tracked by the processor.

Referring to FIG. 17, in operation 1740, in response to a shooting input, the processor of the wearable device according to an embodiment may obtain an image and/or video associated with an external object corresponding to the input. The shooting input of operation 1740 may be received by a pinch gesture described with reference to FIGS. 10A to 10C. While obtaining an image and/or video by performing operation 1740, the processor may repeatedly (or periodically) change the position of the view finder object, using the position of the external object. For example, the image and/or video obtained by performing operation 1740 may include a visual object (e.g., the visual object 1611 of FIG. 16) associated with the external object.

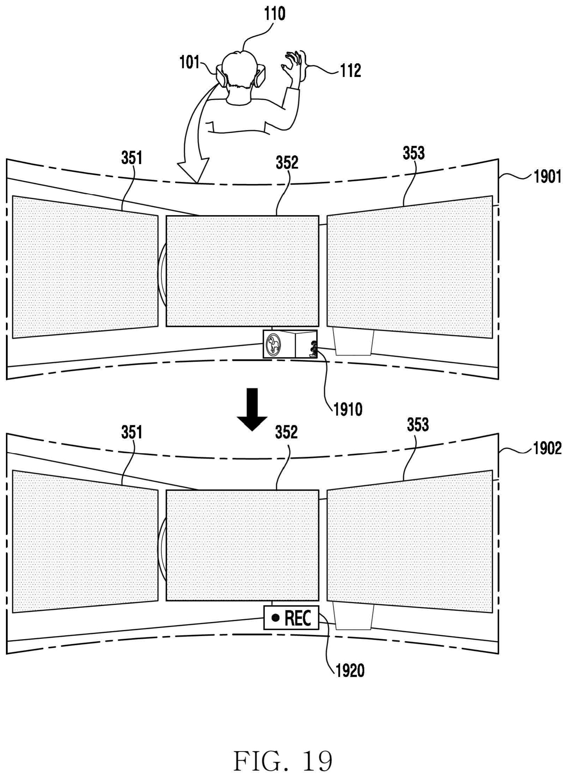

Hereinafter, an example operation of a wearable device associated with a virtual object will be described in greater detail with reference to FIGS. 18A, 18B and/or 19.

FIGS. 18A and 18B are diagrams illustrating an example operation of a wearable device 101 associated with a virtual object 1801 according to various embodiments. The wearable device 101 of FIGS. 1 to 2 and/or the processor 210 of FIG. 2 may perform an operation of the wearable device 101 described with reference to FIGS. 18A to 18B.

Referring to FIGS. 18A to 18B, screens 1801, 1802, 1803, and 1804 displayed by the wearable device 101 executing a camera application are illustrated. The wearable device 101 displaying the virtual object 1810 superimposed on a composite image may display a view finder object 150 and a control handle 330, in response to an input of executing the camera application. Referring to the example screen 1801 of FIG. 18A, the wearable device 101 may display the virtual object 1810 in which at least a portion 1811 superimposed with the view finder object 150 is masked, together with the view finder object 150. For example, the portion 1811 of the virtual object 1810 may have specified transparency (e.g., transparency exceeding 0%). In an embodiment, the wearable device 101 may fully remove the portion 1811 of the virtual object 1810 superimposed with the view finder object 150 within the screen 1801.

While displaying the screen 1801 of FIG. 18A, the wearable device 101 may receive an input associated with the control handle 330. Based on a control menu (e.g., the control menu 1210 of FIG. 12) displayed by the input, the wearable device 101 may receive an input (e.g., an input indicating selection of the visual object 1228 of FIG. 12) for executing a function of combining at least one virtual object with a composite image. After receiving the input, the wearable device 101 may display the portion 1811 of the virtual object 1810 superimposed with the view finder object 150 using specified transparency (e.g., transparency greater than 0% and less than 100%).

Based on the portion 1811 displayed using the specified transparency, the wearable device 101 may receive an input for selecting an area 1820 of the virtual object 1810 to be combined to a portion of the composite image corresponding to the view finder object 150. For example, the wearable device 101 may receive an input for selecting the area 1820, in response to a drag gesture (e.g., a path in which the hand 112 maintaining a pinch gesture is moved) within the portion 1811. The wearable device 101 receiving the input may display the area 1820 of the virtual object 1810 corresponding to the input within the view finder object 150, such as the screen 1802. For example, the wearable device 101 may normally display the area 1820 using 0% transparency.

While displaying the area 1820 like the screen 1802 of FIG. 18A, the wearable device 101 may receive a shooting input. In response to the shooting input, the wearable device 101 may store an image 1822 including a visual object 1824 representing the area 1820. The visual object 1824 included in the image 1822 may correspond to a portion of the virtual object 1810, which was displayed through the area 1820 at a time point of receiving the shooting input. Referring to FIG. 18A, the wearable device 101 may combine the area 1824 of the virtual object 1810 within the image 1822 representing an external environment. For example, the image 1822 may be a screenshot of a portion of the screen 1802 corresponding to the view finder object 150 at the time point of receiving the shooting input.

An example operation of the wearable device 101 associated with the virtual object 1810 having a two-dimensional panel shape is described, but the disclosure is not limited thereto. Referring to the example screen 1803 of FIG. 18B, the wearable device 101 may display the view finder object 150 while displaying a virtual object 1830, which is a three dimensional graphical object. At least a portion of the virtual object 1830 superimposed with the view finder object 150 may be hidden or removed from the screen 1803.

While displaying the screen 1803 of FIG. 18B, the wearable device 101 may receive an input (e.g., an input indicating selection of the visual object 1228 of FIG. 12) for executing a function of combining at least a portion of the virtual object 1830 with a portion of the composite image corresponding to the view finder object 150. After receiving the input, the wearable device 101 may at least partially display a portion of the virtual object 1830 hidden by the view finder object 150. After receiving the input, the wearable device 101 that further receives an input indicating selection of the virtual object 1830 may fully display the virtual object 1830 superimposed with the view finder object 150 (e.g., 0% transparency), as illustrated in the screen 1804 of FIG. 18B.

In response to the shooting input received while displaying the screen 1804 of FIG. 18B, the wearable device 101 may store an image 1842 including a portion of the composite image corresponding to the view finder object 150. The wearable device 101 may store, together with the portion of the composite image, the image 1842 including a visual object 1844 corresponding to a portion of the virtual object 1830 superimposed with the view finder object 150. The image 1842 may be a screenshot of a portion of the screen 1804 corresponding to the view finder object 150 at the time point of receiving the shooting input.

As described above, according to an embodiment, the wearable device 101 may combine a virtual object displayed on the display with an image and/or video with respect to a composite image representing an external space.

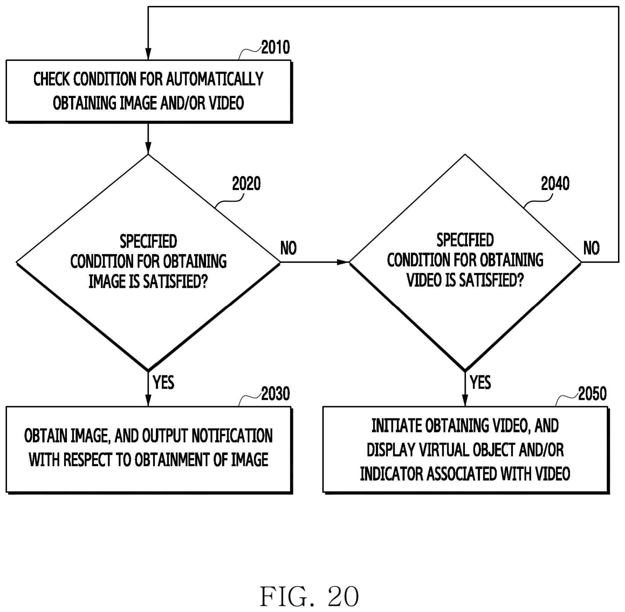

An operation in which the wearable device 101 displays the view finder object 150 according to an input of executing a camera application and stores an image and/or video associated with the view finder object 150 in response to a shooting input has been described, but the disclosure is not limited thereto. For example, the wearable device 101 may support a function of automatically obtaining an image and/or video. Hereinafter, an example operation of the wearable device 101 that automatically stores an image and/or video according to a specific time and/or specific condition will be described in greater detail with reference to FIGS. 19 and 20.

FIG. 19 is a diagram illustrating an example operation of a wearable device 101 obtaining a video according to various embodiments. The wearable device 101 of FIGS. 1 and 2 and/or the processor 210 of FIG. 2 may perform an operation of the wearable device 101 described with reference to FIG. 19.

In an embodiment, the wearable device 101 may determine whether to obtain an image and/or video by checking a preset condition. The condition may be preset by a user input associated with a camera application. For example, the preset condition may be associated with a time and/or a section reserved by a user 110. For example, when the user 110 wears the wearable device 101 at a time associated with the preset condition, the wearable device 101 may automatically obtain an image and/or video. In the example, the wearable device 101 may repeatedly obtain an image and/or video using a section associated with the preset condition.

For example, the preset condition may be associated with a geographical location set by the user 110. Using geofence and/or GPS coordinate, the wearable device 101 may compare a geographical location included in the preset condition with a current location of the wearable device 101. When the current location of the wearable device 101 corresponding to a position included in the preset condition is detected while being worn by the user 110, the wearable device 101 may obtain an image and/or a video.

For example, the preset condition may be associated with whether an external object of a specific type (or a specific category) set by the user 110 is detected. When detecting an external object of a specific type set by the user 110, the wearable device 101 may obtain or store an image and/or video including the external object.

For example, the preset condition may be associated with whether a specific user registered by the user 110 is detected. When the specific user is detected, the wearable device 101 may obtain or store an image and/or video including the specific user.

For example, the preset condition may be associated with a sound detected by the wearable device 101. For example, the wearable device 101, which receives a sound having a volume exceeding a specified volume (e.g., a volume with a unit of decibel), may initiate obtaining an image and/or video.

For example, the preset condition may be associated with motion detected through an outward camera. For example, when an external object moving beyond a specified moving distance and/or specified speed is detected using the outward camera, the wearable device 101 may initiate obtaining an image and/or video.

Referring to FIG. 19, example screens 1901 and 1902 displayed by the wearable device 101 obtaining an image and/or video using a preset condition are illustrated. While displaying a plurality of virtual objects 351, 352, and 353 within the screen 1901, the wearable device 101 determining to obtain an image and/or video using a preset condition may further display a virtual object 1910 for providing a preview of a video obtained using a camera. The virtual object 1910 may be displayed at a position, which is not superimposed with other virtual objects 351, 352, and 353 within the screen 1901. In response to an input of selecting the virtual object 1910, the wearable device 101 may display a view finder object corresponding to the video, as illustrated in the screen 304 of FIG. 3B.

After displaying the virtual object 1910 as illustrated in the screen 1901, the wearable device 101 may display an indicator 1920 for notifying obtainment of a video based on expiration of a specified duration (e.g., a few seconds) as illustrated in the screen 1902, instead of displaying the virtual object 1910. The indicator 1920 of FIG. 19 may correspond to the indicator 1022 of FIG. 10B. The virtual object 1910 of FIG. 19 may correspond to the virtual object 1023 of FIG. 10B. The indicator 1920 may blink periodically. When obtainment of the video is completed, the wearable device 101 may cease displaying the indicator 1920 and/or the virtual object 1910.

Hereinafter, an example operation of the wearable device 101 described with reference to FIG. 19 will be described in greater detail with reference to FIG. 20.

FIG. 20 is a flowchart illustrating an example operation of a wearable device according to various embodiments. The wearable device 101 of FIGS. 1 and 2 and/or the processor 210 of FIG. 2 may perform an operation of the wearable device described with reference to FIG. 20. The operation of the wearable device of FIG. 20 may be associated with the operation of the wearable device 101 described with reference to FIG. 19. Instructions stored in memory (e.g., the memory 215 of FIG. 2) of the wearable device, when executed by a processor of the wearable device, may cause the wearable device to perform the operation of FIG. 20.

Referring to FIG. 20, in operation 2010, the processor of the wearable device according to an embodiment may check a condition for automatically obtaining an image and/or video. The condition of operation 2010 may include a preset condition described with reference to FIG. 19. Based on execution of a process different from a foreground process set to occupy a display and/or displaying area, such as a background process, the condition may be checked. The condition of operation 2010 may be preset or stored by a user input.

Referring to FIG. 20, in operation 2020, the processor of the wearable device according to an embodiment may determine whether a specified condition for obtaining an image is satisfied. When the specified condition for obtaining an image is satisfied (2020-YES), the processor may perform operation 2030. When the specified condition for obtaining an image is not satisfied, or before the specified condition is satisfied (2020-NO), the processor may perform operation 2040.

Referring to FIG. 20, in operation 2030, the processor of the wearable device according to an embodiment may obtain an image and output a notification of obtaining of the image. The processor identifying the specified condition for obtaining an image may obtain or store an image without a view finder object (e.g., the view finder object 150 of FIG. 1), by performing operation 2030. The processor may display a notification message (e.g., a notification message provided by an operating system such as a pop-up window and/or toast) to notify obtainment of the image. The disclosure is not limited thereto, and the processor checking the specified condition for obtaining an image may display a visual object (e.g., a dialog window) checking whether to obtain an image, before obtaining the image.

Referring to FIG. 20, in operation 2040, the processor of the wearable device according to an embodiment may check whether a specified condition for obtaining a video is satisfied. When the specified condition for obtaining a video is satisfied (2040-YES), the processor may perform operation 2050. When the specified condition for obtaining a video and the specified condition for obtaining an image are not satisfied (2040-NO), the processor may maintain checking the condition of operation 2010, without performing operations 2030 and 2050.

Referring to FIG. 20, in operation 2050, the processor of the wearable device according to an embodiment may initiate obtaining of video, and display a virtual object (e.g., the virtual object 1910 of FIG. 19) and/or an indicator (e.g., the indicator 1920 of FIG. 19) associated with the video. The processor may activate one or more outward cameras (e.g., the camera 225 of FIG. 2) and may initiate recording of video using a composite image of images of the one or more outward cameras. The screens 1901 and 1902 of FIG. 19 may be example screens displayed by the processor performing operation 2050.

As described above, according to an embodiment, the wearable device may capture a portion of an image of an external environment displayed through at least one display covering two eyes of a user, using a view finder object. The view finder object may be moved on the image displayed through a display. A size of the view finder object may be adjusted by a user input. The wearable device may change a position and/or size of the view finder object based on a gesture (e.g., a hand gesture) of the user wearing the wearable device. The wearable device may obtain an image and/or video based on the user's gesture. The wearable device may obtain a depth map together with the image and/or the video, based on the user's gesture. The wearable device may obtain an image and/or video with respect to a specific external object included in the external environment based on the user's gesture, independently of motion of the user wearing the wearable device. The wearable device may obtain an image and/or video including at least one virtual object displayed through a display and the external environment, based on the user's gesture.

Hereinafter, an example exterior of the wearable device 101 described with reference to FIGS. 1 to 20 is illustrated with reference to FIGS. 21A, 21B, 22A and/or 22B. A wearable device 2100 of FIG. 21A and/or a wearable device 2200 of FIG. 21B and/or a wearable device 2200 of FIG. 22A and/or 22B may be an example of the wearable device 101 of FIG. 1.

FIG. 21A is a perspective view illustrating an example wearable device according to various embodiments. The wearable device 2100 according to an embodiment may have a shape of glasses wearable on a user's body part (e.g., head). The wearable device 2100 may include a head-mounted display (HMD). For example, a housing of the wearable device 2100 may include a flexible material such as rubber and/or silicone having a shape in close contact with a portion (e.g., a portion of a face surrounding two eyes) of the user's head. For example, the housing of the wearable device 2100 may include one or more straps able to be twined around the user's head and/or one or more temples attachable to ear of the head.

Referring to FIG. 21A, according to an embodiment, the wearable device 2100 may include at least one display 2150 and a frame supporting the at least one display 2150.

According to an embodiment, the wearable device 2100 may be wearable on a portion of the user's body. The wearable device 2100 may provide augmented reality (AR), virtual reality (VR), or mixed reality (MR) combining the AR and the VR to a user wearing the wearable device 2100. For example, the wearable device 2100 may display a virtual reality image provided from at least one optical device 2182 and 2184 of FIG. 21B on at least one display 2150, in response to a user's preset gesture obtained through a motion recognition camera 2160-2 and 2160-3 of FIG. 21B.

According to an embodiment, the at least one display 2150 may provide visual information to a user. For example, the at least one display 2150 may include a transparent or translucent lens. The at least one display 2150 may include a first display 2150-1 and/or a second display 2150-2 spaced apart from the first display 2150-1. For example, the first display 2150-1 and the second display 2150-2 may be disposed at positions corresponding to the user's left and right eyes, respectively.

Referring to FIG. 21B, the at least one display 2150 may provide visual information transmitted from external light to a user and other visual information distinguished from the above visual information, through a lens included in at least one display 2150. The lens may be formed based on at least one of a fresnel lens, a pancake lens, or a multi-channel lens. For example, the at least one display 2150 may include a first surface 2131 and a second surface 2132 opposite to the first surface 2131. A displaying area may be formed on the second surface 2132 of at least one display 2150. When the user wears the wearable device 2100, ambient light may be transmitted to the user by being incident on the first surface 2131 and being penetrated through the second surface 2132. For another example, the at least one display 2150 may display an augmented reality image in which a virtual reality image provided by the at least one optical device 2182 and 2184 is combined with a reality screen transmitted through external light, on a displaying area formed on the second surface 2132.

According to an embodiment, the at least one display 2150 may include at least one waveguide 2133 and 2134 that transmits light transmitted from the at least one optical device 2182 and 2184 by diffracting to the user. The at least one waveguide 2133 and 2134 may be formed based on at least one of glass, plastic, or polymer. A nano pattern may be formed on at least a portion of the outside or inside of the at least one waveguide 2133 and 2134. The nano pattern may be formed based on a grating structure having a polygonal or curved shape. Light incident to an end of the at least one waveguide 2133 and 2134 may be propagated to another end of the at least one waveguide 2133 and 2134 by the nano pattern. The at least one waveguide 2133 and 2134 may include at least one of at least one diffraction element (e.g., a diffractive optical element (DOE), a holographic optical element (HOE)), and a reflection element (e.g., a reflection mirror). For example, the at least one waveguide 2133 and 2134 may be disposed in the wearable device 2100 to guide a screen displayed by the at least one display 2150 to the user's eyes. For example, the screen may be transmitted to the user's eyes through total internal reflection (TIR) generated in the at least one waveguide 2133 and 2134.

The wearable device 2100 may analyze an object included in a real image collected through a photographing camera 2160-4, combine with a virtual object corresponding to an object that become a subject of augmented reality provision among the analyzed object, and display on the at least one display 2150. The virtual object may include at least one of text and images for various information associated with the object included in the real image. The wearable device 2100 may analyze the object based on a multi-camera such as a stereo camera. For the object analysis, the wearable device 2100 may execute space recognition (e.g., simultaneous localization and mapping (SLAM) using the multi-camera and/or time-of-flight (ToF). The user wearing the wearable device 2100 may watch an image displayed on the at least one display 2150.

According to an embodiment, a frame may be configured with a physical structure in which the wearable device 2100 may be worn on the user's body. According to an embodiment, the frame may be configured so that when the user wears the wearable device 2100, the first display 2150-1 and the second display 2150-2 may be positioned corresponding to the user's left and right eyes. The frame may support the at least one display 2150. For example, the frame may support the first display 2150-1 and the second display 2150-2 to be positioned at positions corresponding to the user's left and right eyes.

Referring to FIG. 21A, according to an embodiment, the frame may include an area 2120 at least partially in contact with the portion of the user's body in case that the user wears the wearable device 2100. For example, the area 2120 of the frame in contact with the portion of the user's body may include an area in contact with a portion of the user's nose, a portion of the user's ear, and a portion of the side of the user's face that the wearable device 2100 contacts. According to an embodiment, the frame may include a nose pad 2110 that is contacted on the portion of the user's body. When the wearable device 2100 is worn by the user, the nose pad 2110 may be contacted on the portion of the user's nose. The frame may include a first temple 2104 and a second temple 2105 that is contacted on another portion of the user's body that is distinct from the portion of the user's body.

For example, the frame may include a first rim 2101 surrounding at least a portion of the first display 2150-1, a second rim 2102 surrounding at least a portion of the second display 2150-2, a bridge 2103 disposed between the first rim 2101 and the second rim 2102, a first pad 2111 disposed along a portion of the edge of the first rim 2101 from one end of the bridge 2103, a second pad 2112 disposed along a portion of the edge of the second rim 2102 from the other end of the bridge 2103, the first temple 2104 extending from the first rim 2101 and fixed to a portion of the wearer's ear, and the second temple 2105 extending from the second rim 2102 and fixed to a portion of the ear opposite to the ear. The first pad 2111 and the second pad 2112 may be in contact with the portion of the user's nose, and the first temple 2104 and the second temple 2105 may be in contact with a portion of the user's face and the portion of the user's ear. The temples 2104 and 2105 may be rotatably connected to the rim through hinge units 2106 and 2107 of FIG. 21B. The first temple 2104 may be rotatably connected with respect to the first rim 2101 through the first hinge unit 2106 disposed between the first rim 2101 and the first temple 2104. The second temple 2105 may be rotatably connected with respect to the second rim 2102 through the second hinge unit 2107 disposed between the second rim 2102 and the second temple 2105. According to an embodiment, the wearable device 2100 may identify an external object (e.g., a user's fingertip) touching the frame and/or a gesture performed by the external object, using a touch sensor, a grip sensor, and/or a proximity sensor formed on at least a portion of the surface of the frame.

According to an embodiment, the wearable device 2100 may include hardware (e.g., hardware described above based on the block diagram of FIG. 2) that performs various functions. For example, the hardware may include a battery module 2170, an antenna module 2175, the at least one optical device 2182 and 2184, speakers (e.g., speakers 2155-1 and 2155-2), a microphone (e.g., microphones 2165-1, 2165-2, and 2165-3), a light emitting module (not illustrated), and/or a printed circuit board (PCB) 2190 (e.g., printed circuit board). Various hardware may be disposed in the frame.

According to an embodiment, the microphone (e.g., the microphones 2165-1, 2165-2, and 2165-3) of the wearable device 2100 may obtain a sound signal, by being disposed on at least a portion of the frame. The first microphone 2165-1 disposed on the bridge 2103, the second microphone 2165-2 disposed on the second rim 2102, and the third microphone 2165-3 disposed on the first rim 2101 are illustrated in FIG. 21B, but the number and disposition of the microphone 2165 are not limited to an embodiment of FIG. 21B. In case that the number of the microphone 2165 included in the wearable device 2100 is two or more, the wearable device 2100 may identify the direction of the sound signal using a plurality of microphones disposed on different portions of the frame.

According to an embodiment, the at least one optical device 2182 and 2184 may project a virtual object on the at least one display 2150 in order to provide various image information to the user. For example, the at least one optical device 2182 and 2184 may be a projector. The at least one optical device 2182 and 2184 may be disposed adjacent to the at least one display 2150 or may be included in the at least one display 2150 as a portion of the at least one display 2150. According to an embodiment, the wearable device 2100 may include a first optical device 2182 corresponding to the first display 2150-1, and a second optical device 2184 corresponding to the second display 2150-2. For example, the at least one optical device 2182 and 2184 may include the first optical device 2182 disposed at a periphery of the first display 2150-1 and the second optical device 2184 disposed at a periphery of the second display 2150-2. The first optical device 2182 may transmit light to the first waveguide 2133 disposed on the first display 2150-1, and the second optical device 2184 may transmit light to the second waveguide 2134 disposed on the second display 2150-2.

In an embodiment, a camera 2160 may include the photographing camera 2160-4, an eye tracking camera (ET CAM) 2160-1, and/or the motion recognition camera 2160-2 and camera 2160-3. The photographing camera 2160-4, the eye tracking camera 2160-1, and the motion recognition camera 2160-2 and camera 2160-2 may be disposed at different positions on the frame and may perform different functions. The eye tracking camera 2160-1 may output data indicating a position of eye or the gaze of the user wearing the wearable device 2100. For example, the wearable device 2100 may detect the gaze from an image including the user's pupil obtained through the eye tracking camera 2160-1.

The wearable device 2100 may identify an object (e.g., a real object, and/or a virtual object) focused by the user, using the user's gaze obtained through the eye tracking camera 2160-1. The wearable device 2100 identifying the focused object may execute a function (e.g., gaze interaction) for interaction between the user and the focused object. The wearable device 2100 may represent a portion corresponding to eye of an avatar indicating the user in the virtual space, using the user's gaze obtained through the eye tracking camera 2160-1. The wearable device 2100 may render an image (or a screen) displayed on the at least one display 2150, based on the position of the user's eye.

For example, visual quality of a first area associated with the gaze within the image and visual quality (e.g., resolution, brightness, saturation, grayscale, and pixels per inch (PPI)) of a second area distinguished from the first area may be different. The wearable device 2100 may obtain an image having the visual quality of the first area matching the user's gaze and the visual quality of the second area using foveated rendering. For example, when the wearable device 2100 supports an iris recognition function, user authentication may be performed based on iris information obtained using the eye tracking camera 2160-1. An example in which the eye tracking camera 2160-1 is disposed toward the user's right eye is illustrated in FIG. 21B, but the disclosure is not limited thereto, and the eye tracking camera 2160-1 may be disposed alone toward the user's left eye or may be disposed toward two eyes.

In an embodiment, the photographing camera 2160-4 may photograph a real image or background to be matched with a virtual image in order to implement the augmented reality or mixed reality content. The photographing camera 2160-4 may be used to obtain an image having a high resolution based on a high resolution (HR) or a photo video (PV). The photographing camera 2160-4 may photograph an image of a specific object existing at a position viewed by the user and may provide the image to the at least one display 2150. The at least one display 2150 may display one image in which a virtual image provided through the at least one optical device 2182 and 2184 is overlapped with information on the real image or background including an image of the specific object obtained using the photographing camera. The wearable device 2100 may compensate for depth information (e.g., a distance between the wearable device 2100 and an external object obtained through a depth sensor), using an image obtained through the photographing camera 2160-4. The wearable device 2100 may perform object recognition through an image obtained using the photographing camera 2160-4. The wearable device 2100 may perform a function (e.g., auto focus) of focusing an object (or subject) within an image and/or an optical image stabilization (OIS) function (e.g., an anti-shaking function) using the photographing camera 2160-4. While displaying a screen representing a virtual space on the at least one display 2150, the wearable device 2100 may perform a pass through function for displaying an image obtained through the photographing camera 2160-4 overlapping at least a portion of the screen. In an embodiment, the photographing camera may be disposed on the bridge 2103 disposed between the first rim 2101 and the second rim 2102.

The eye tracking camera 2160-1 may implement a more realistic augmented reality by matching the user's gaze with the visual information provided on the at least one display 2150, by tracking the gaze of the user wearing the wearable device 2100. For example, when the user looks at the front, the wearable device 2100 may naturally display environment information associated with the user's front on the at least one display 2150 at a position where the user is positioned. The eye tracking camera 2160-1 may be configured to capture an image of the user's pupil in order to determine the user's gaze. For example, the eye tracking camera 2160-1 may receive gaze detection light reflected from the user's pupil and may track the user's gaze based on the position and movement of the received gaze detection light. In an embodiment, the eye tracking camera 2160-1 may be disposed at a position corresponding to the user's left and right eyes. For example, the eye tracking camera 2160-1 may be disposed in the first rim 2101 and/or the second rim 2102 to face the direction in which the user wearing the wearable device 2100 is positioned.

The motion recognition camera 2160-2 and camera 2160-3 may provide a specific event to the screen provided on the at least one display 2150 by recognizing the movement of the whole or portion of the user's body, such as the user's torso, hand, or face. The motion recognition camera 2160-2 and camera 2160-3 may obtain a signal corresponding to motion by recognizing the user's motion (e.g., gesture recognition), and may provide a display corresponding to the signal to the at least one display 2150. The processor may identify a signal corresponding to the operation and may perform a preset function based on the identification. The motion recognition camera 2160-2 and 2160-3 may be used to perform SLAM for 6 degrees of freedom pose (6 dof pose) and/or a space recognition function using a depth map. The processor may perform a gesture recognition function and/or an object tracking function, using the motion recognition cameras 2160-2 and 2160-3. In an embodiment, the motion recognition camera 2160-2 and camera 2160-3 may be disposed on the first rim 2101 and/or the second rim 2102.

The camera 2160 included in the wearable device 2100 is not limited to the above-described eye tracking camera 2160-1 and the motion recognition camera 2160-2 and 2160-3. For example, the wearable device 2100 may identify an external object included in the FoV using a camera disposed toward the user's FoV. That the wearable device 2100 identifies the external object may be performed based on a sensor for identifying a distance between the wearable device 2100 and the external object, such as a depth sensor and/or a time of flight (ToF) sensor. The camera 2160 disposed toward the FoV may support an autofocus function and/or an optical image stabilization (OIS) function. For example, in order to obtain an image including a face of the user wearing the wearable device 2100, the wearable device 2100 may include the camera 2160 (e.g., a face tracking (FT) camera) disposed toward the face.

Although not illustrated, the wearable device 2100 according to an embodiment may further include a light source (e.g., LED) that emits light toward a subject (e.g., user's eyes, face, and/or an external object in the FoV) photographed using the camera 2160. The light source may include an LED having an infrared wavelength. The light source may be disposed on at least one of the frame, and the hinge units 2106 and 2107.

According to an embodiment, the battery module 2170 may supply power to electronic components of the wearable device 2100. In an embodiment, the battery module 2170 may be disposed in the first temple 2104 and/or the second temple 2105. For example, the battery module 2170 may be a plurality of battery modules 2170. The plurality of battery modules 2170, respectively, may be disposed on each of the first temple 2104 and the second temple 2105. In an embodiment, the battery module 2170 may be disposed at an end of the first temple 2104 and/or the second temple 2105.

The antenna module 2175 may transmit the signal or power to the outside of the wearable device 2100 or may receive the signal or power from the outside. In an embodiment, the antenna module 2175 may be disposed in the first temple 2104 and/or the second temple 2105. For example, the antenna module 2175 may be disposed close to one surface of the first temple 2104 and/or the second temple 2105.

A speaker 2155 may output a sound signal to the outside of the wearable device 2100. A sound output module may be referred to as a speaker. In an embodiment, the speaker 2155 may be disposed in the first temple 2104 and/or the second temple 2105 in order to be disposed adjacent to the ear of the user wearing the wearable device 2100. For example, the speaker 2155 may include a second speaker 2155-2 disposed adjacent to the user's left ear by being disposed in the first temple 2104, and a first speaker 2155-1 disposed adjacent to the user's right ear by being disposed in the second temple 2105.

The light emitting module (not illustrated) may include at least one light emitting element. The light emitting module may emit light of a color corresponding to a specific state or may emit light through an operation corresponding to the specific state in order to visually provide information on a specific state of the wearable device 2100 to the user. For example, when the wearable device 2100 requires charging, it may emit red light at a constant cycle. In an embodiment, the light emitting module may be disposed on the first rim 2101 and/or the second rim 2102.

Referring to FIG. 21B, according to an embodiment, the wearable device 2100 may include the printed circuit board (PCB) 2190. The PCB 2190 may be included in at least one of the first temple 2104 or the second temple 2105. The PCB 2190 may include an interposer disposed between at least two sub PCBs. On the PCB 2190, one or more hardware (e.g., hardware illustrated by the blocks of FIG. 2) included in the wearable device 2100 may be disposed. The wearable device 2100 may include a flexible PCB (FPCB) for interconnecting the hardware.

According to an embodiment, the wearable device 2100 may include at least one of a gyro sensor, a gravity sensor, and/or an acceleration sensor for detecting the posture of the wearable device 2100 and/or the posture of a body part (e.g., a head) of the user wearing the wearable device 2100. Each of the gravity sensor and the acceleration sensor may measure gravity acceleration, and/or acceleration based on preset 3-dimensional axes (e.g., x-axis, y-axis, and z-axis) perpendicular to each other. The gyro sensor may measure angular velocity of each of preset 3-dimensional axes (e.g., x-axis, y-axis, and z-axis). At least one of the gravity sensor, the acceleration sensor, and the gyro sensor may be referred to as an inertial measurement unit (IMU). According to an embodiment, the wearable device 2100 may identify the user's motion and/or gesture performed to execute or stop a specific function of the wearable device 2100 based on the IMU.

FIGS. 22A to 22B are perspective views illustrating an example of an exterior of a wearable device according to various embodiments. A wearable device 2200 of FIGS. 22A to 22B may include at least a portion of the hardware of the wearable device 2100 described with reference to FIGS. 21A and/or 21B. According to an embodiment, an example of the exterior of a first surface 2210 of a housing of the wearable device 2200 may be illustrated in FIG. 22A, and an example of the exterior of the second surface 2220 opposite to the first surface 2210 may be illustrated in FIG. 22B.

Referring to FIG. 22A, according to an embodiment, the first surface 2210 of the wearable device 2200 may have an attachable shape on the user's body part (e.g., the user's face). Although not illustrated, the wearable device 2200 may further include a strap for being fixed on the user's body part, and/or one or more temples (e.g., the first temple 2104 and/or the second temple 2105 of FIGS. 21A to 21B). A first display 2150-1 for outputting an image to the left eye among the user's two eyes and a second display 2150-2 for outputting an image to the right eye among the user's two eyes may be disposed on the first surface 2210. The wearable device 2200 may further include rubber or silicon packing, which are formed on the first surface 2210, for preventing and/or reducing interference by light (e.g., ambient light) different from the light emitted from the first display 2150-1 and the second display 2150-2.

According to an embodiment, the wearable device 2200 may include cameras 2160-1 for photographing and/or tracking two eyes of the user adjacent to each of the first display 2150-1 and the second display 2150-2. The cameras 2160-1 may be referred to as the gaze tracking camera 2160-1 of FIG. 21B. According to an embodiment, the wearable device 2200 may include cameras 2160-5 and 2160-6 for photographing and/or recognizing the user's face. The cameras 2160-5 and 2160-6 may be referred to as a FT camera. The wearable device 2200 may control an avatar representing a user in a virtual space, based on a motion of the user's face identified using the cameras 2160-5 and 2160-6. For example, the wearable device 2200 may change a texture and/or a shape of a portion (e.g., a portion of an avatar representing a human face) of the avatar, using information obtained by the cameras 2160-5 and 2160-6 (e.g., the FT camera) and representing the facial expression of the user wearing the wearable device 2200.

Referring to FIG. 22B, a camera (e.g., cameras 2160-7, 2160-8, 2160-9, 2160-10, 2160-11, and 2160-12), and/or a sensor (e.g., the depth sensor 2230) for obtaining information associated with the external environment of the wearable device 2200 may be disposed on the second surface 2220 opposite to the first surface 2210 of FIG. 22A. For example, the cameras 2160-7, 2160-8, 2160-9, and 2160-10 may be disposed on the second surface 2220 in order to recognize an external object. The cameras 2160-7, 2160-8, 2160-9, and 2160-10 of FIG. 22B may be referred to the motion recognition cameras 2160-2 and 2160-3 of FIG. 21B.

For example, using cameras 2160-11 and 2160-12, the wearable device 2200 may obtain an image and/or video to be transmitted to each of the user's two eyes. The camera 2160-11 may be disposed on the second surface 2220 of the wearable device 2200 to obtain an image to be displayed through the second display 2150-2 corresponding to the right eye among the two eyes. The camera 2160-12 may be disposed on the second surface 2220 of the wearable device 2200 to obtain an image to be displayed through the first display 2150-1 corresponding to the left eye among the two eyes. The cameras 2160-11 and 2160-12 may correspond to the photographing camera 2160-4 of FIG. 21B.

According to an embodiment, the wearable device 2200 may include the depth sensor 2230 disposed on the second surface 2220 in order to identify a distance between the wearable device 2200 and the external object. Using the depth sensor 2230, the wearable device 2200 may obtain spatial information (e.g., a depth map) about at least a portion of the FoV of the user wearing the wearable device 2200. Although not illustrated, a microphone for obtaining sound output from the external object may be disposed on the second surface 2220 of the wearable device 2200. The number of microphones may be one or more according to embodiments.

In an embodiment, a method of obtaining an image and/or video using a user interface (UI) that is adjustable by a user may be required. As described above, according to an example embodiment, a wearable device (e.g., the wearable device 101 of FIG. 1, the wearable device 2100 of FIG. 21A and/or FIG. 21B, and the wearable device 2200 of FIG. 22A and/or FIG. 22B) may comprise: a housing, a display (e.g., the display 220 of FIG. 2) disposed on at least a portion of the housing and arranged in front of an eye of a user (e.g., the user 110 of FIG. 1) based on a user wearing the wearable device, a plurality of cameras (e.g., the camera 225 of FIG. 2) configured to obtain images with respect to at least a portion of an external environment of the wearable device, memory (e.g., the memory 215 of FIG. 2) storing instructions, and at least one processor (e.g., the processor 210 of FIG. 2), comprising processing circuitry. At least one processor, individually and/or collectively, may be configured to execute the instructions and may be configured to cause the wearable device to, in response to a first input, display a view finder object (e.g., the view finder object 150 of FIG. 1) on a composite image (e.g., the composite image 520 of FIG. 5) of the images, wherein the composite image may be displayed to represent a portion of the external environment beyond the display. At least one processor individually and/or collectively, may be configured to cause the wearable device to, in response to a second input for moving or resizing the view finder object, change at least one of a position or a size of the view finder object, while displaying the view finder object on the composite image. At least one processor individually and/or collectively, may be configured to cause the wearable device to, in response to a third input for shooting, store, in the memory, a portion of the composite image corresponding to the view finder object, while displaying the view finder object on the composite image.

For example, at least one processor, individually and/or collectively, may be configured to cause the wearable device to display a pointer object (e.g., the virtual object 342 of FIG. 3A) extended from a point of the composite image associated with a body part including a hand (e.g., the hand 112 of FIG. 3A). At least one processor individually and/or collectively, may be configured to cause the wearable device to detect the second input using a shape of the hand, while displaying the pointer object facing a boundary line (e.g., the boundary line 150-1 of FIG. 8B) of the view finder object.

For example, at least one processor, individually and/or collectively, may be configured to cause the wearable device to, in response to the second input detected while displaying the pointer object facing an edge of the boundary line having a rectangular shape, change the position of the view finder object using a direction of the pointer object.

For example, at least one processor, individually and/or collectively, may be configured to cause the wearable device to, in response to the second input detected while displaying the pointer object facing a vertex (e.g., the vertex 150-2 of FIG. 8B) of the boundary line having a rectangular shape, change the size of the view finder object using the direction of the pointer object.

For example, at least one processor, individually and/or collectively, may be configured to cause the wearable device to, in response to the second input, change the size to less than or equal to a maximum size, which is specified to maintain visibility of the boundary line within the display.

For example, at least one processor, individually and/or collectively, may be configured to cause the wearable device to detect the third input using the shape of the hand, while displaying a pointer object facing another portion different from the portion of the composite image specified by the view finder object.

For example, the wearable device may include another camera disposed to face the eye of the user. At least one processor, individually and/or collectively, may be configured to cause the wearable device to determine a direction of the eye using the other camera. At least one processor individually and/or collectively, may be configured to cause the wearable device to change a focal length of at least one of the plurality of cameras using a portion of the external environment corresponding to the direction, based on the direction facing the portion of the composite image specified by the view finder object.

For example, at least one processor, individually and/or collectively, may be configured to cause the wearable device to, in response to a fourth input indicating to select a handle object (e.g., the control handle 330 of FIGS. 3A to 3C) displayed in the display together with the view finder object, display visual objects corresponding to each of functions associated with shooting, along a direction of an edge of the view finder object having a rectangular shape.

For example, the wearable device may include a depth sensor. At least one processor, individually and/or collectively, may be configured to cause the wearable device to, in response to the third input, store, in the memory, a depth map obtained using the depth sensor and corresponding to the portion, together with the portion of the composite image.

For example, at least one processor, individually and/or collectively, may be configured to cause the wearable device to display a virtual object representing a measurable range by the depth sensor, inside the view finder object.

For example, at least one processor, individually and/or collectively, may be configured to cause the wearable device to, before detecting the third input, display a virtual object representing the depth map obtained from the depth sensor, superimposed on the portion of the composite image specified by the view finder object.

For example, at least one processor, individually and/or collectively, may be configured to cause the wearable device to, in response to the first input for executing a first software application, display the view finder object. At least one processor individually and/or collectively, may be configured to cause the wearable device to, in response to a fourth input for executing a second software application different from the first software application that is detected while obtaining a video for the portion of the composite image in response to the third input, cease to display the view finder object and display an indicator (e.g., the indicator 1022 of FIG. 10B and/or the indicator 1920 of FIG. 19) indicating a recording of the video.

For example, at least one processor, individually and/or collectively, may be configured to cause the wearable device to, in response to a fifth input indicating to select the indicator, display the view finder object at a position of the view finder object, which was displayed before receiving the fourth input.

For example, at least one processor, individually and/or collectively, may be configured to cause the wearable device to: in response to the first input detected while displaying a virtual object superimposed on the composite image, display the virtual object in which at least a portion superimposed on the view finder object is masked, together with the view finder object. At least one processor individually and/or collectively, may be configured to cause the wearable device to, in response to a fourth input for capturing the portion of the composite image together with the virtual object, display, in the view finder object, the masked at least portion of the virtual object using a specified transparency.

For example, at least one processor, individually and/or collectively, may be configured to cause the wearable device to detect a fourth input indicating tracking of an external object in the portion of the composite image specified by the view finder object, while displaying the view finder object on the composite image. At least one processor individually and/or collectively, may be configured to cause the wearable device to, in response to the fourth input, change the position of the view finder object on the composite image using a position of the external object associated with the composite image.

As described above, according to an example embodiment, a method of a wearable device may be provided. The wearable device may comprise a housing, a display disposed on at least a portion of the housing and arranged in front of an eye of a user wearing the wearable device, a plurality of cameras obtaining images with respect to at least a portion of an external environment of the wearable device. The method may comprise: in response to a first input, displaying a view finder object on a composite image of the images, wherein the composite image may be displayed to represent a portion of the external environment beyond the display. The method may comprise, in response to a second input for moving or resizing the view finder object, changing at least one of a position or a size of the view finder object, while displaying the view finder object on the composite image. The method may comprise, in response to a third input for shooting, storing, in the memory, a portion of the composite image corresponding to the view finder object, while displaying the view finder object on the composite image.

For example, the changing may comprise displaying a pointer object extended from a point of the composite image associated with a body part including a hand. The method may comprise detecting the second input using a shape of the hand, while displaying the pointer object facing a boundary line of the view finder object.

For example, the changing may comprise, in response to the second input detected while displaying the pointer object facing an edge of the boundary line having a rectangular shape, changing the position of the view finder object using a direction of the pointer object.

For example, the changing may comprise, in response to the second input detected while displaying the pointer object facing a vertex of the boundary line having a rectangular shape, changing the size of the view finder object using the direction of the pointer object.

For example, the changing may comprise, in response to the second input, changing the size to less than or equal to a maximum size, which is specified to maintain visibility of the boundary line within the display.

For example, the storing may comprise detecting the third input using the shape of the hand, while displaying a pointer object facing another portion different from the portion of the composite image specified by the view finder object.

For example, the method may comprise determining a direction of the eye by using another camera disposed to face the eye of the user. The method may comprise changing a focal length of at least one of the plurality of cameras using a portion of the external environment corresponding to the direction, based on the direction facing the portion of the composite image specified by the view finder object.

For example, the method may comprise, in response to a fourth input indicating to select a handle object displayed in the display together with the view finder object, displaying visual objects corresponding to each of functions associated with shooting, along a direction of an edge of the view finder object having a rectangular shape.

For example, the storing may comprise, in response to the third input, storing, in the memory, a depth map obtained using a depth sensor of the wearable device and corresponding to the portion, together with the portion of the composite image.

For example, the displaying may may comprise displaying a virtual object representing a measurable range by the depth sensor, inside the view finder object.

For example, the method may comprise, before detecting the third input, displaying a virtual object representing the depth map obtained from the depth sensor, superimposed on the portion of the composite image specified by the view finder object.

For example, the displaying may comprise, in response to the first input for executing a first software application, displaying the view finder object. The method may comprise, in response to a fourth input for executing a second software application different from the first software application detected while obtaining a video for the portion of the composite image in response to the third input; and ceasing to display the view finder object and displaying an indicator indicating a recording of the video.

The according to an example embodiment method may comprise, in response to a fifth input indicating to select the indicator, displaying the view finder object at a position of the view finder object, which was displayed before receiving the fourth input.

For example, the displaying may comprise, in response to the first input detected while displaying a virtual object superimposed on the composite image, displaying the virtual object in which at least a portion superimposed on the view finder object is masked, together with the view finder object. The method may comprise, in response to a fourth input for capturing the portion of the composite image together with the virtual object, displaying, in the view finder object, the masked at least portion of the virtual object using a specified transparency.

The method according to an example embodiment may comprise detecting a fourth input indicating tracking of an external object in the portion of the composite image specified by the view finder object, while displaying the view finder object on the composite image. The method may comprise, in response to the fourth input, changing the position of the view finder object on the composite image using a position of the external object associated with the composite image.

As described above, according to an example embodiment, a non-transitory computer-readable storage medium including instructions may be provided. The instructions, when executed by at least one processor, individually and/or collectively, of a wearable device comprising: a housing, a display disposed on at least a portion of the housing and arranged in front of an eye of a user based on wearing the wearable device, and a plurality of cameras configured to obtain images with respect to at least a portion of an external environment of the wearable device, may cause the wearable device to display, on the display, a view finder object, superimposed on a composite image of the images. The instructions, when executed by the processor, may cause the wearable device to, in response to receiving an input for shooting while displaying the view finder object at a first position of the display, store a first portion of the composite image corresponding to the first position in the memory. The instructions, when executed by the processor, may cause the wearable device to, in response to receiving an input for shooting while displaying the view finder object at a second position of the display, store a second portion of the composite image corresponding to the second position in the memory.

As described above, according to an example embodiment, a wearable device (e.g., the wearable device 101 of FIG. 1, the wearable device 2100 of FIG. 21A and/or FIG. 21B, and the wearable device 2200 of FIG. 22A and/or FIG. 22B) may comprise: a housing, a display (e.g., the display 220 of FIG. 2) disposed on at least a portion of the housing and arranged in front of an eye of a user (e.g., the user 110 of FIG. 1) based on wearing the wearable device, a plurality of cameras (e.g., the camera 225 of FIG. 2) configured to obtain images with respect to at least a portion of an external environment of the wearable device, memory (e.g., the memory 215 of FIG. 2) storing instructions, and at least one processor, comprising processing circuitry (e.g., the processor 210 of FIG. 2). At least one processor, individually and/or collectively may be configured to execute the instructions and may be configured to cause the wearable device to: display, on the display, a view finder object (e.g., the view finder object 150 of FIG. 1) superimposed on a composite image (e.g., the composite image 520 of FIG. 5) of the images. At least one processor individually and/or collectively, may be configured to cause the wearable device to, in response to receiving an input for shooting while displaying the view finder object at a first position of the display, store a first portion of the composite image corresponding to the first position in the memory. At least one processor individually and/or collectively, may be configured to cause the wearable device to, in response to receiving an input for shooting while displaying the view finder object at a second position of the display, store a second portion of the composite image corresponding to the second position in the memory.

As described above, according to an example embodiment, a wearable device may comprise: a housing, a first display configured, when worn by a user, to be disposed toward an eye of the user, a second display directed to a second direction opposite to a first direction to which the first display is directed, one or more cameras, memory storing instructions, comprising one or more storage media, and at least one processor comprising processing circuitry. At least one processor, individually and/or collectively, may be configured to execute the instructions and may be configured to cause the wearable device to: obtain images using the one or more cameras. At least one processor individually and/or collectively, may be configured to cause the wearable device to, control the first display to display a screen representing environment adjacent to the wearable device using at least portion of the images. At least one processor individually and/or collectively, may be configured to cause the wearable device to, while displaying the screen, receive a first input to execute a camera application. At least one processor individually and/or collectively, may be configured to cause the wearable device to, in response to the first input, control the first display to visually highlight, with respect to a remaining portion of the screen, a portion of the screen to be captured using the camera application. At least one processor individually and/or collectively, may be configured to cause the wearable device to, while displaying the portion of the screen that is visually highlighted with respect to the remaining portion of the screen, receive a second input to capture the portion of the screen. At least one processor individually and/or collectively, may be configured to cause the wearable device to, in response to the second input, capture the portion of the screen. At least one processor individually and/or collectively, may be configured to cause the wearable device to control the second display to display an indicator to notify performing shooting using the one or more cameras.

For example, at least one processor individually or collectively, may be configured to cause the wearable device to control the first display to display executable objects associated with the shooting, in a position adjacent to the portion of the screen that is visually highlighted with respect to the remaining portion of the screen.

For example, the executable objects may be superimposed on the screen.

For example, at least one processor, individually or collectively, may be configured to cause the wearable device to control the first display to further display a visual object for a focal point on the portion of the screen based on displaying the portion of the screen visually highlighted with respect to the remaining portion of the screen.

For example, at least one processor individually or collectively, may be configured to cause the wearable device to: in response to the second input, store the portion of the screen and a depth map with respect to the portion.

For example, the wearable device may comprise a button at least partially visible through the housing. At least one processor individually or collectively, may be configured to cause the wearable device to receive the second screen through the button.

As described above, according to an example embodiment, a wearable device may comprise: a housing, a first display disposed on a first surface of the housing that, based on the wearable device being worn by a user, faces a face of the user, a second display disposed on a second surface of the housing that, based on the wearable device being worn by the user, faces an external environment of the wearable device, a plurality of cameras configured to obtain a plurality of images with respect to at least portion of the external environment of the wearable device, memory storing instructions, comprising one or more storage media, and at least one processor comprising processing circuitry. At least one processor individually or collectively, may be configured to execute the instructions and may be configured to cause the wearable device to: display, through the first display, a composite image with respect to at least portion of the external environment generated based on the plurality of images, and a view finder object at least partially superimposed on the composite image. At least one processor individually or collectively, may be configured to cause the wearable device to, in an image shooting mode, display, through the second display, a first visual notification corresponding to the image shooting mode while the composite image and the view finder object is displayed through the first display. At least one processor individually or collectively, may be configured to cause the wearable device to, in a video shooting mode, display, through the second display, a second visual notification corresponding to the video shooting mode while the composite image and the view finder object is displayed through the second display. At least one processor individually or collectively, may be configured to cause the wearable device to, in the image shooting mode or the video shooting mode, store at least portion of the composite image corresponding to the view finder object in the memory in response to a user input.

For example, at least one processor individually or collectively, may be configured to cause the wearable device to display, through the first display, a control handle at a position adjacent to the view finder object.

For example, at least one processor individually or collectively, may be configured to cause the wearable device to display, through the first display , the control handle to include at least one of visual object corresponding to a function to browse an image or a video stored in the memory within the control handle. At least one processor individually or collectively, may be configured to cause the wearable device to, based on an input to select the visual object, display, through the first display, a list including the image or the video.

For example, at least one processor individually or collectively, may be configured to cause the wearable device to control the first display to display a visual object associated with a focal point positioned within the view finder object.

For example, the wearable device may comprise: a button at least partially visible through the housing. At least one processor individually or collectively, may be configured to cause the wearable device to receive the input through the button.

For example, at least one processor individually or collectively, may be configured to cause the wearable device to, in response to the input, store the at least portion of the composite image and a depth map with respect to the at least portion.

For example, at least one processor individually or collectively, may be configured to cause the wearable device to, in response to the input, display, through the second display, at least one of the first visual notification or the second visual notification.

For example, at least one processor individually or collectively, may be configured to cause the wearable device to display, through the first display, executable objects associated with the image shooting mode or the video shooting mode.

For example, at least one processor individually or collectively, may be configured to cause the wearable device to display the view finder object by visually highlighting a portion of a screen displayed on the first display, corresponding to the at least portion of the composite image to be stored by the input, with respect to other portion.

As described above, according to an example embodiment, a method of operating a wearable device may be provided. The wearable device may comprise: a housing, a first display configured, based on being worn by a user, to be disposed toward an eye of the user, a second display directed to a second direction opposite to a first direction to which the first display is directed, and one or more cameras. The method may comprise obtaining images using the one or more cameras. The method may comprise controlling the first display to display a screen representing environment adjacent to the wearable device using at least portion of the images. The method may comprise, while displaying the screen, receiving a first input to execute a camera application. The method may comprise, in response to the first input, controlling the first display to visually highlight, with respect to a remaining portion of the screen, a portion of the screen to be captured using the camera application. The method may comprise, while displaying the portion of the screen that is visually highlighted with respect to the remaining portion of the screen, receiving a second input to capture the portion of the screen. The method may comprise, in response to the second input, capturing the portion of the screen. The method may comprise controlling the second display to display an indicator to notify performing shooting using the one or more cameras.

For example, the controlling the first display may comprise controlling the first display to display executable objects associated with the shooting, in a position adjacent to the portion of the screen visually highlighted with respect to the remaining portion of the screen.

For example, the executable objects may be superimposed on the screen.

For example, the controlling the first display may comprise controlling the first display to further display a visual object for a focal point on the portion of the screen based on displaying the portion of the screen visually highlighted with respect to the remaining portion of the screen.

For example, the capturing may comprise in response to the second input, storing the portion of the screen and a depth map with respect to the portion.

The device described above may be implemented as a hardware component, a software component, and/or a combination of a hardware component and a software component. For example, the devices and components described in the various example embodiments may be implemented using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to an example embodiment may be implemented in the form of a program command that may be performed through various computer means and recorded on a computer-readable medium. In this case, the medium may store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include may be those configured to store program instructions, including a magnetic medium such as a hard disk, floppy disk, and magnetic tape, optical recording medium such as a CD-ROM and DVD, magneto-optical medium, such as a floptical disk, and ROM, RAM, flash memory, and the like. In addition, examples of other media may include recording media or storage media managed by app stores that distribute applications, sites that supply or distribute various software, servers, and the like.

While the disclosure has been illustrated and described with reference to various example embodiments, it will be understood that the various example embodiments are intended to be illustrative, not limiting. It will be further understood by those skilled in the art that various changes in form and detail may be made without departing from the full scope of the disclosure, including the appended claims and their equivalents. It will also be understood that any of the embodiment(s) described herein may be used in conjunction with any other embodiment(s) described herein.

## Claims

1. A wearable device comprising:
a housing;
a first display configured, based on being worn by a user, to be disposed toward an eye of the user;
a second display directed to a second direction opposite to a first direction to which the first display is directed;
one or more cameras;
memory storing instructions, comprising one or more storage media; and
at least one processor comprising processing circuitry;
wherein at least one processor individually or collectively, is configured to execute the instructions and is configured to cause the wearable device to:
obtain images using the one or more cameras;
control the first display to display a screen representing environment adjacent to the wearable device using at least portion of the images;
while displaying the screen, receive a first input to execute a camera application;
in response to the first input, control the first display to visually highlight, with respect to a remaining portion of the screen, a portion of the screen to be captured using the camera application;
while displaying the portion of the screen visually highlighted with respect to the remaining portion of the screen, receive a second input to capture the portion of the screen; and
in response to the second input:
capture the portion of the screen; and
control the second display to display an indicator providing a notification of performing shooting using the one or more cameras.

2. The wearable device of claim 1, wherein at least one processor individually or collectively, is configured to cause the wearable device to:
control the first display to display executable objects associated with the shooting, in a position adjacent to the portion of the screen that visually highlighted with respect to the remaining portion of the screen.

3. The wearable device of claim 2, wherein the executable objects are superimposed on the screen.

4. The wearable device of claim 1, wherein at least one processor individually or collectively, is configured to cause the wearable device to:
control the first display to further display a visual object for a focal point on the portion of the screen based on displaying the portion of the screen visually highlighted with respect to the remaining portion of the screen.

5. The wearable device of claim 1, wherein at least one processor individually or collectively, is configured to cause the wearable device to:
in response to the second input, store the portion of the screen and a depth map with respect to the portion of the screen.

6. The wearable device of claim 1, further comprising
a button at least partially visible through the housing;
wherein at least one processor individually or collectively, is configured to cause the wearable device to:
receive the second screen through operation of the button.

7. A wearable device comprising:
a housing;
a first display disposed on a first surface of the housing directed, based on the wearable device being worn by a user, to a face of the user;
a second display disposed on a second surface of the housing directed, based on the wearable device being worn by the user, to an external environment of the wearable device;
a plurality of cameras configured to obtain a plurality of images with respect to at least portion of the external environment of the wearable device;
memory storing instructions, comprising one or more storage media; and
at least one processor comprising processing circuitry;
wherein at least one processor individually or collectively, is configured to execute the instructions and is configured to cause the wearable device to:
display, through the first display, a composite image with respect to at least portion of the external environment generated based on the plurality of images, and a view finder object at least partially superimposed on the composite image;
in an image shooting mode, display, through the second display, a first visual notification corresponding to the image shooting mode while the composite image and the view finder object is displayed through the first display;
in a video shooting mode, display, through the second display, a second visual notification corresponding to the video shooting mode while the composite image and the view finder object is displayed through the second display; and
in the image shooting mode or the video shooting mode, store at least portion of the composite image corresponding to the view finder object in the memory in response to an input.

8. The wearable device of claim 7, wherein at least one processor individually or collectively, is configured to cause the wearable device to:
display, through the first display, a control handle at a position adjacent to the view finder object.

9. The wearable device of claim 8, wherein at least one processor individually or collectively, is configured to cause the wearable device to:
display, through the first display, the control handle to include at least one of visual object corresponding to a function to browse an image or a video stored in the memory within the control handle; and
based on an input to select the visual object, display, through the first display, a list including the image or the video.

10. The wearable device of claim 7, wherein at least one processor individually or collectively, is configured to cause the wearable device to:
control the first display to display a visual object associated with a focal point positioned within the view finder object.

11. The wearable device of claim 7, further comprises:
a button at least partially visible through the housing;
wherein at least one processor individually or collectively, is configured to cause the wearable device to:
receive the input through the button.

12. The wearable device of claim 7, wherein at least one processor individually or collectively, is configured to cause the wearable device to:
in response to the input, store the at least portion of the composite image and a depth map with respect to the at least portion.

13. The wearable device of claim 7, wherein at least one processor individually or collectively, is configured to cause the wearable device to:
in response to the input, display, through the second display, at least one of the first visual notification or the second visual notification.

14. The wearable device of claim 7, wherein at least one processor individually or collectively, is configured to cause the wearable device to:
display, through the first display, executable objects associated with the image shooting mode or the video shooting mode.

15. The wearable device of claim 7, wherein at least one processor individually or collectively, is configured to cause the wearable device to:
display the view finder object by visually highlighting a portion of a screen displayed on the first display, corresponding to the at least portion of the composite image to be stored by the input, with respect to an other portion.
